# EUROPEAN PATENT SPECIFICATION

(11) **EP 2 066 498 B1**
(45) Date of publication and mention of the grant of the patent: **14.05.2014**
(21) Application number: 07808897.8
(22) Date of filing: 18.09.2007
(51) Int. Cl.: B32B 37/12, B32B 29/00, B32B 7/12, D21H 27/32, C09J 101/28

(54) **MULTI-PLY WEB OF FLEXIBLE MATERIAL, SUCH AS PAPER AND NONWOVEN, AND PRODUCT AND METHOD FOR IMPROVING THE BLEED FASTNESS OF A FLUORESCENT WHITENING AGENT IN ADHESIVE ZONES OF A MULTI-PLY WEB**
MEHRLAGIGE BAHN AUS FLEXIBLEM MATERIAL, WIE ZUM BEISPIEL PAPIER ODER VLIESSTOFF, UND PRODUKT UND VERFAHREN ZUR VERBESSERUNG DER AUSBLUTUNGSECHTHEIT EINES FLUORESZIERENDEN WEISSTÖNERS IN KLEBSTOFFBEREICHEN EINER MEHRLAGIGEN BAHN
BANDE MULTI-PLI DE MATIÈRE SOUPLE, TEL QUE DU PAPIER ET DU NON-TISSÉ, ET PRODUIT ET PROCÉDÉ POUR AMÉLIORER LA RAPIDITÉ DE DÉGORGEMENT D'UN AGENT BLANCHISSANT FLUORESCENT DANS DES ZONES ADHÉSIVES D'UNE BANDE MULTI-PLI

(30) Priority: 18.09.2006 WO PCT/SE2006/001061
(43) Date of publication of application: 10.06.2009
(73) Proprietor: SCA HYGIENE PRODUCTS AB, 405 03 Göteborg (SE)
(72) Inventor: STRÅLIN, Anders, S-423 38 Torslanda (SE); FALK, Magnus, S-439 94 Onsala (SE); WALLSTABE, Paul, S-440 30 Marstrand (SE)
(74) Representative: Valea AB
(86) International application number: PCT/SE2007/050660
(87) International publication number: WO 2008/036038

(56) References cited:
- EP-A1- 0 905 317
- EP-A1- 1 312 466
- WO-A1-97/08387
- WO-A1-97/11226
- WO-A1-98/50482
- WO-A1-2005/105469
- US-A- 5 858 554
- US-A1- 2004 062 907
- US-A1- 2004 238 135
- US-A1- 2006 042 767

## Description

### TECHNICAL FIELD

The present invention relates to a multi-ply web of flexible material, such as paper and nonwoven material, comprising a fluorescent whitening agent, whereby the multi-ply web comprises at least a first ply and a second ply which are interconnected in one or more adhesive interconnection zones by means of an adhesive composition comprising polyvinyl alcohol or a cellulose ether. In addition, the present invention relates to a product made from the multi-ply web according to the invention. Especially, it relates to tissue web products such as toilet and kitchen paper, paper towels, hand towels, napkins, handkerchiefs, wiping material and the like. Furthermore, the present invention relates to a method for improving the bleed fastness of a fluorescent whitening agent in one or more adhesive interconnection zones of a multi-ply web of flexible material, such as paper and nonwoven material, which multi-ply web comprises at least a first ply and a second ply which are interconnected in the one or more adhesive interconnection zones by means of an adhesive composition comprising polyvinyl alcohol or a cellulose ether.

### BACKGROUND OF THE INVENTION

It is very common to laminate two or more plies of a flexible material, such as a paper material or a nonwoven material, in order to produce a final multi-ply web. For example, it is very common to laminate two or more tissue plies in order to produce final tissue web products such as toilet and kitchen paper, paper towels, hand towels, napkins, handkerchiefs, wiping material and the like. Through lamination, a more flexible and softer tissue web product is obtained as compared to if one single ply with a corresponding thickness and basis weight had been produced. The absorbent capacity and the bulk are also improved.

The lamination of two or more plies of a flexible material is often made by means of gluing, i.e. the plies are interconnected by means of glue in one or more adhesive interconnection zones. Many types of glue utilized today for lamination are based on polyvinyl alcohol, which provides good runnability and ply bonding. Other types of glue utilized today for lamination are based on a cellulose ether (e.g. methyl cellulose), which also provides good runnability and ply bonding.

Furthermore, the flexible material of the plies laminated to a multi-ply web may comprise fluorescent whitening agents (FWAs), which are also called, for example, optical brighteners (OBs), optical brightening agents (OBAs), fluorescent brightening agents (FBAs), optical bleachers and fluorescent bleachers.

It is very common to utilize FWAs in order to improve the brightness of a flexible material, such as a paper or a nonwoven material. FWAs are substances that absorb light in the invisible ultraviolet region of the spectrum and re-emit light in the blue region. The emission of blue light creates a whitening effect and offsets any yellow cast of a substrate. Examples of commonly used types of FWAs for improving the brightness of paper are derivatives of diamino-stilbene-sulphonic acids having different numbers of sulphonate groups.

FWAs may be added to the pulp during the pulping stage. Alternatively, they may be applied to the surface of the flexible material at the size press or by coating. Furthermore, since it is common to utilize FWAs in flexible materials and since it is difficult to remove FWAs from flexible materials in recycling processes, FWAs are often contained in recycled flexible materials, i.e. in flexible materials comprising recycled pulp.

One of the criteria for product safety is bleed fastness of FWAs from the product. However, polyvinyl alcohol and cellulose ethers act as a carrier for FWAs. Consequently, when plies of a flexible material comprising FWAs are laminated by means of an adhesive composition comprising polyvinyl alcohol or a cellulose ether to a final multi-ply web, the bleed fastness of FWAs may be reduced in the produced multi-ply web due to the fact that FWAs are dissolved by polyvinyl alcohol and cellulose ethers. More specifically, the bleed fastness of FWAs may then be reduced in the adhesive interconnection zone(s) of the produced multi-ply web. The risk of possible bleeding of FWAs from the adhesive interconnection zone(s) comprising polyvinyl alcohol or a cellulose ether in such multi-ply webs must be reduced.

One way to improve the bleed fastness of FWAs in adhesive interconnection zone(s), i.e. to reduce the risk of possible bleeding or to reduce bleeding of FWAs from adhesive interconnection zone(s), of multi-ply webs of a flexible material, in which plies are interconnected by an adhesive composition comprising polyvinyl alcohol or a cellulose ether in the adhesive interconnection zone(s), is to utilize low amounts of the adhesive composition comprising polyvinyl alcohol or a cellulose ether. However, there is then a risk of obtaining poor ply bonding.

Another way to improve the bleed fastness of FWAs in adhesive interconnection zone(s) of multi-ply webs of a flexible material, in which plies are interconnected by an adhesive composition comprising polyvinyl alcohol or a cellulose ether in the adhesive interconnection zone(s), is to use polyvinyl alcohol or a cellulose ether with lower solubility. However, polyvinyl alcohol or a cellulose ether with low solubility may be difficult to apply on a ply of a flexible material and may also get stuck on devices or machines during the production process.

Thus, there is still a need for a way of improving the bleed fastness of FWAs in adhesive interconnection zone(s) of multi-ply webs of a flexible material, in which plies are interconnected by an adhesive composition comprising polyvinyl alcohol or a cellulose ether in the adhesive interconnection zone(s), which does not involve the above mentioned drawbacks. Furthermore, there is still a need for a multi-ply web of flexible material comprising FWAs, whereby plies are interconnected in one or more adhesive interconnection zones by means of an adhesive composition comprising polyvinyl alcohol or a cellulose ether, whereby the bleed fastness of FWAs in the adhesive interconnection zone(s) is improved and whereby the above-mentioned drawbacks are avoided.

### SUMMARY OF THE INVENTION

Accordingly, one object of the present invention is to provide an improved multi-ply web of flexible material, such as paper and nonwoven material, said flexible material comprising a fluorescent whitening agent, whereby the multi-ply web comprises at least a first ply and a second ply which are interconnected in one or more adhesive interconnection zones by means of an adhesive composition comprising a cellulose ether.

This object has been achieved by the fact that the adhesive composition further comprises a cationic polymer selected from the group consisting of aliphatic polyamines, polyethylene imines, modified polyethylene imines, polycondensation products of cationic cyanamide derivatives, polycondensation products of dicyandiamide, cationic polyvinyl amines, polyvinyl formamide, polyvinyl formamide derivatives, polyallyl amines, copolymers between a cationic acrylate and acrylamide, homopolymers of diallyl-dimethyl-ammonium chloride, copolymers between diallyl-dimethyl-ammonium chloride and acrylamide, and cationic modifications of non-ionic polyacrylamide.

In one embodiment the cellulose ether is methyl cellulose.

In a further embodiment, the adhesive composition comprising a cellulose ether comprises 0.2-3% w/w cationic polymer, preferably 0.5-1.5% w/w cationic polymer.

In a still further embodiment the adhesive composition comprises 1-10% w/w of a cellulose ether, preferably 2-5% w/w of a cellulose ether.

Another object of the present invention is to provide an improved multi-ply web of flexible material, such as paper and nonwoven material, said flexible material comprising a fluorescent whitening agent, whereby the multi-ply web comprises at least a first ply and a second ply which are interconnected in one or more adhesive interconnection zones by means of an adhesive composition comprising polyvinyl alcohol.

This object has been achieved by the fact that the adhesive composition further comprises a cationic polymer selected from the group consisting of aliphatic polyamines, polyethylene imines, modified polyethylene imines, polycondensation products of cationic cyanamide derivatives, polycondensation products of dicyandiamide, cationic polyvinyl amines, polyvinyl formamide, polyvinyl formamide derivatives, polyallyl amines, copolymers between a cationic acrylate and acrylamide, homopolymers of diallyl-dimethyl-ammonium chloride, copolymers between diallyl-dimethyl-ammonium chloride and acrylamide, and cationic modifications of non-ionic polyacrylamide.

In one embodiment, the adhesive composition comprising polyvinyl alcohol comprises 0.2-4% w/w cationic polymer, preferably 1-2% w/w cationic polymer.

In a further embodiment the adhesive composition comprises 2-12% w/w polyvinyl alcohol, preferably 4-6% w/w polyvinyl alcohol.

The cationic polymer is selected from the group consisting of aliphatic polyamines, polyethylene imines, modified polyethylene imines, polycondensation products of cationic cyanamide derivatives, polycondensation products of dicyandiamide cationic polyvinyl amines, polyvinyl formamide, polyvinyl formamide derivatives, polyallyl amines, copolymersybetween a cationic acrylate and acrylamide, homopolymers of diallyl-dimethyl-ammonium chloride, copolymers between diallyl-dimethyl-ammonium chloride and acrylamide, and cationic modifications of non-ionic polyacrylamide.

According to a further aspect the cationic polymer is selected from the group consisting of poly-diallyl-dimethyl-ammonium chloride, aliphatic polyamines, cationic polyvinyl amines, polyvinyl formamide, polyvinyl formamide derivatives, cationic polyacrylamides and polyethylene imines.

According to still a further aspect the flexible material comprises recycled flexible material.

Another object of the present invention is to provide an improved method for improving the bleed fastness of a fluorescent whitening agent in one or more adhesive interconnection zones of a multi-ply web of flexible material, such as paper and nonwoven material, whereby said multi-ply web comprises at least a first ply and a second ply which are interconnected in said one or more adhesive interconnection zones by means of an adhesive composition comprising a cellulose ether.

This object has been achieved by the fact that the method comprises a step of incorporating a cationic polymer in the adhesive composition comprising a cellulose ether wherein said cationic polymer is selected from the group consisting of aliphatic polyamines, polyethylene imines, modified polyethylene imines, polycondensation products of cationic cyanamide derivatives, polycondensation products of dicyandiamide, cationic polyvinyl amines, polyvinyl formamide, polyvinyl formamide derivatives, polyallyl amines, copolymers between a cationic acrylate and acrylamide, homopolymers of diallyl-dimethyl-ammonium chloride, copolymers between diallyl-dimethyl-ammonium chloride and acrylamide, and cationic modifications of non-ionic polyacrylamide.

A further object of the present invention is to provide an improved method for improving the bleed fastness of a fluorescent whitening agent in one or more adhesive interconnection zones of a multi-ply web of flexible material, such as paper and nonwoven material, whereby said multi-ply web comprises at least a first ply and a second ply which are interconnected in said one or more adhesive interconnection zones by means of an adhesive composition comprising polyvinyl alcohol.

This object has been achieved by the fact that the method comprises a step of incorporating a cationic polymer in the adhesive composition comprising polyvinyl alcohol wherein said cationic polymer is selected from the group consisting of aliphatic polyamines, polyethylene imines, modified polyethylene imines, polycondensation products of cationic cyanamide derivatives, polycondensation products of dicyandiamide, cationic polyvinyl amines, polyvinyl formamide, polyvinyl formamide derivatives, polyallyl amines, copolymers between a cationic acrylate and acrylamide, homopolymers of diallyl-dimethyl-ammonium chloride, copolymers between diallyl-dimethyl-ammonium chloride and acrylamide, and cationic modifications of non-ionic polyacrylamide.

Still other objects and features of the present invention will become apparent from the following detailed description and from the claims considered in conjunction with the accompanying drawing. It is to be understood, however, that the drawing is designed solely for purposes of illustration and not as a definition of the limits of the invention, for which reference should be made to the appended claims, It should be further understood that the drawing not necessarily drawn to scale and that, unless otherwise indicated, it is merely intended to conceptually illustrate the structures described herein.

### BRIEF DESCRIPTION OF THE DRAWING

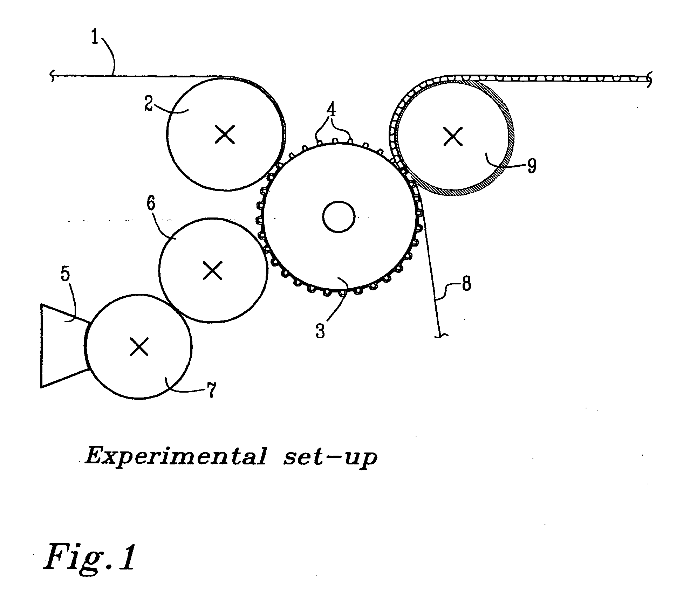

Figure 1 shows a schematic view of an embossing lamination device for making embossing laminated two-ply tissue laminates utilized as experimental set-up in Example 3.

### DETAILED DESCRIPTION OF PREFERRED EMBODIMENTS

As mentioned previously, the invention concerns a multi-ply web of flexible material. The term "multi-ply web" is herein to be understood as a web comprising two or more plies. Thus, the multi-ply web according to the invention may be, for example, a two-ply web or a three-ply web.

The term "flexible material" is herein to be understood to include paper materials, nonwoven materials, and materials being a mixture of paper and nonwoven materials.

The term "paper material" is herein to be understood to include tissue paper materials.

The term "tissue paper" is herein to be understood as a soft absorbent paper having a basis weight below 65 g/m² and typically between 10 and 50 g/m². Its density is typically below 0.60 g/cm³, preferably below 0.30 g/cm³ and more preferably between 0.08 and 0.20 g/cm³. Moist tissue paper webs are usually dried against one or more heated rolls. A method which is commonly used for tissue paper is so-called Yankee drying. At Yankee drying the moist paper web is pressed against a steam-heated Yankee cylinder, which can have a very large diameter. The paper web is usually creped against the Yankee cylinder. Another drying method is so-called through-air-drying (TAD). In this method the paper is dried by means of hot air blown through the moist paper web, often without a preceding wet pressing. In connection with the TAD drying, the patterned structure of the drying fabric is transferred to the paper web. This structure is also essentially maintained in the wet condition of the paper, since it has been imparted to the wet paper web.

International patent application no. PCT/SE98/02461 discloses a method for producing an impulse dried paper, especially tissue paper, having a three-dimensional pattern, said paper having high bulk and softness. Impulse drying involves that the moist paper web is passed through the press nip between a press roll or press shoe and a heated roll, which is heated to such a high temperature that a quick and strong steam generation occurs in the interface between the moist paper web and the heated roll. The three-dimensional embossment pattern is accomplished by means of a pattern provided on the heated roll. The counter means, for example a press felt, against which the paper is pressed in connection with the simultaneous impulse drying and shaping, has a non-rigid surface. The tissue paper in the present invention may be any type of tissue paper. The tissue paper may be creped or non-creped. The creping may take place in wet or dry condition. It may further be foreshortened by any other methods, such as so-called rush transfer between wires.

The fibres contained in the tissue paper are mainly pulp fibres from chemical pulp, mechanical pulp, thermo mechanical pulp, chemo mechanical pulp and/or chemo thermo mechanical pulp (CTMP). The tissue paper may also contain other types of fibres enhancing e.g. strength, absorption or softness of the paper. These fibres may be made from regenerated cellulose or synthetic material such as polyolefins, polyesters, polyamides etc.

The term "nonwoven" is applied to a wide range of products which in term of their properties are located between the groups of paper and cardboard on the one hand and textiles on the other hand. As regards nonwoven a large number of extremely varied production processes are used, such as the air-laid, wetlaid, spunlaced, spunbond, meltblown techniques etc. Nonwovens represent flexible porous fabrics that are not produced by the classical methods of weaving or knitting, but by intertwining and/or by cohesive and/or adhesive bonding of typical synthetic textile fibres, which may for example be present in the form of endless fibres or fibres prefabricated with an endless length, as synthetic fibres produced in situ or in the form of staple fibres. Alternatively, they may be made from natural fibres or from blends of synthetic fibres and natural fibres.

The flexible material of the multi-ply web according to the invention may be recycled flexible material, newly-produced material or a combination thereof.

Furthermore, the flexible material of the multi-ply web according to the invention comprises one or more fluorescent whitening agents (FWA), which are also called, for example, optical brighteners (OBs), optical brightening agents (OBAs), fluorescent brightening agents (FBAs), optical bleachers and fluorescent bleachers. A fluorescent whitening agent comprised in the flexible material of the multi-ply web according to the invention may be any fluorescent whitening agent suitable to utilize in order to improve the brightness of paper or nonwoven materials. For example, it may be a derivative of a diamino-stilbene-sulphonic acid, such as a derivative of 4,4'-diaminostilbene-2,2'-disulphonic acid. Examples of commonly used derivatives are di-, tetra-, and hexasulphonated derivatives of 4,4'-diaminostilbene-2,2'-disulphonic acid. Furthermore, a fluorescent whitening agent comprised in the flexible material of the multi-ply web according to the invention may be of a type that binds to the fibers of the flexible material or may be of a type that is coated onto the flexible material. In case the flexible material comprises two or more FWAs, they may be of different types.

In case the flexible material of the multi-ply web according to the invention comprises recycled flexible material, the fluorescent whitening agent(s) may be comprised in the flexible material due to the fact that the recycled flexible material comprises one or more fluorescent whitening agents. As mentioned above, FWAs are difficult to remove in recycling processes and, thus, recycled flexible materials often comprise FWAs. Alternatively, in case the flexible material is made of newly-produced material, the fluorescent whitening agent(s) may be comprised in the flexible material due to the fact that the fluorescent whitening agent(s) is/are added to the flexible material during production of the multi-ply web. As mentioned above, FWAs may be added to the pulp during the pulping stage or may be applied to the surface of the flexible material at the size press or by coating.

In a first embodiment, the multi-ply web according to the invention is a two-ply web. The two-ply web comprises a first ply and a second ply which are interconnected, i.e. laminated, in one or more adhesive interconnection zones by means of an adhesive composition comprising polyvinyl alcohol. Examples of adhesive compositions comprising polyvinyl alcohol are: Kappasil 250, Kappasil 260, Kappasil 260-1 supplied by Kapp-Chemie GmbH, Germany; Gummi 88Z3 supplied by Türmerleim GmbH, Germany; and Aquagrip TL 220, Aquagrip TLX222 supplied by Bostik SA, France.

The term "polyvinyl alcohol" is herein to be understood to include polyvinyl alcohol as well as other structures in which there are certain changes compared to the structure of polyvinyl alcohol, but which have the same "overall structure" as polyvinyl alcohol. Polyvinyl alcohol is usually produced by hydrolyzing polyvinyl acetate to polyvinyl alcohol. For example, polyvinyl alcohol may be 85-90 mol% hydrolyzed.

As mentioned above, adhesive compositions based on polyvinyl alcohol provide good runnability and ply bonding when used for lamination of plies to a multi-ply web, but polyvinyl alcohol acts as a carrier for FWAs. Thereby, polyvinyl alcohol counteracts the bleed fastness of FWAs from a multi-ply web of flexible material in the adhesive interconnection zone(s).

However, it has now surprisingly been found that through incorporation of a cationic polymer selected from the group consisting of aliphatic polyamines, polyethylene imines, modified polyethylene imines, polycondensation products of cationic cyanamide derivatives, polycondensation products of dicyandiamide, cationic polyvinyl amines, polyvinyl formamide, polyvinyl formamide derivatives, polyallyl amines, copolymers between a cationic acrylate and acrylamide, homopolymers of diallyl-dimethyl-ammonium chloride, copolymers between diallyl-dimethyl-ammonium chloride and acrylamide, and cationic modifications of non-ionic polyacrylamide in the adhesive composition comprising polyvinyl alcohol, the bleed fastness of FWAs from a multi-ply web in the adhesive interconnection zone(s) is improved. The risk of possible bleeding of FWAs from the adhesive interconnection zone(s) comprising polyvinyl alcohol is thereby reduced.

Therefore, the adhesive composition, by which the first and second plies are laminated in the first embodiment of the multi-ply web according to the invention, further comprises a cationic polymer. Thus, the adhesive composition utilized for lamination of the plies of the first embodiment comprises polyvinyl alcohol and a cationic polymer selected from the group consisting of aliphatic polyamines, polyethylene imines, modified polyethylene imines, polycondensation products of cationic cyanamide derivatives, polycondensation products of dicyandiamide, cationic polyvinyl amines, polyvinyl formamide, polyvinyl formamide derivatives, polyallyl amines, copolymers between a cationic acrylate and acrylamide, homopolymers of diallyl-dimethyl-ammonium chloride, copolymers between diallyl-dimethyl-ammonium chloride and acrylamide, and cationic modifications of non-ionic polyacrylamide.

The cationic polymer may be added to the adhesive composition comprising polyvinyl alcohol. Alternatively, the adhesive composition comprising polyvinyl alcohol may be added to the cationic polymer. Preferably, the cationic polymer is incorporated in the adhesive composition before the plies of the multi-ply web are interconnected by the adhesive composition.

The adhesive composition may comprise, for example, 0.2-4% w/w cationic polymer. Preferably, the adhesive composition comprises 1-2% w/w cationic polymer. Furthermore, the adhesive composition may comprise, for example, 2-12% w/w polyvinyl alcohol Preferably, the adhesive composition comprises 4-6% w/w polyvinyl alcohol. In one example, the adhesive composition comprises 1-2% w/w cationic polymer and 4-6% w/w polyvinyl alcohol. The concentrations of substances provided herein are expressed in weight percentage (% w/w). Unless otherwise stated, these concentrations are measured as dry weights.

The cationic polymer is selected from the group consisting of aliphatic polyamines, polyethylene imines, modified polyethylene imines, polycondensation products of cationic cyanamide derivatives, polycondensation products of dicyandiamide, cationic polyvinyl amines, polyvinyl formamide, polyvinyl formamide derivatives polyallyl amines, copolymers between a cationic acrylale and acrylamide, homopolymers of diallyl-dimethyl-ammonium chloride, copolymers between diallyl-dimethyl-ammonium chloride and acrylamide, and cationic modifications of non-ionic polyacrylamide.

More preferably, the cationic polymer is selected from the group consisting of poly-diallyl-dimethyl-ammonium chloride, aliphatic polyamines, cationic polyvinyl amines, polyvinyl formamide, polyvinyl formamide derivatives, cationic polyacrylamides and polyethylene imines.

The adhesive composition may comprise polyvinyl alcohol and one cationic polymer or it may comprise polyvinyl alcohol and more than one cationic polymer (i.e. at least two different cationic polymers). Alternatively, the adhesive composition may comprise polyvinyl alcohol, at least one cationic polymer and a dye, whereby the adhesive composition is coloured. In still another alternative, the adhesive composition comprises polyvinyl alcohol, at least one cationic polymer and any other suitable constituents such as, for example, viscosity modifiers, anti-foaming agents and preserving agents.

The fact that a multi-ply web, in which the plies are laminated with an adhesive composition comprising polyvinyl alcohol and a cationic polymer, presents an improved bleed fastness of FWAs in the adhesive interconnection zone(s) compared to a corresponding multi-ply web, in which the plies are laminated with a corresponding adhesive composition comprising polyvinyl alcohol, but not any cationic polymer, will be shown in the experimental section below.

In a second embodiment, the multi-ply web according to the invention is a three-ply web. The second embodiment corresponds to the first embodiment except for the fact that the multi-ply web comprises one further ply, i.e. it is a three-ply web instead of a two-ply web. The three-ply web comprises a first ply, a second ply and a third ply, whereby the second ply is provided as a middle ply. The first and second plies of the second embodiment correspond to the first and second plies of the first embodiment. However, the second ply and the third ply are also interconnected, i.e. laminated, in one or more adhesive interconnection zones by means of the adhesive composition comprising polyvinyl alcohol and at least one cationic polymer described in connection with the first embodiment.

In a third embodiment, the multi-ply web according to the invention is a three-ply web. The third embodiment corresponds to the second embodiment except for the fact that the second and third plies are not interconnected by means of the adhesive composition comprising polyvinyl alcohol and at least one cationic polymer. Instead the second and third plies are interconnected by means of any other suitable adhesive composition or by means of only mechanical embossing, whereby the mechanical joining of the plies occurs in the embossing sites.

In further embodiments, the multi-ply web according to the invention comprises more than three plies, whereby all plies are laminated by means of the adhesive composition comprising polyvinyl alcohol and at least one cationic polymer described in connection with the first embodiment.

In alternative embodiments, the multi-ply web according to the invention comprises more than three plies, whereby only some of the plies are laminated by means of the adhesive composition comprising polyvinyl alcohol and at least one cationic polymer described in connection with the first embodiment whereas the other plies are laminated by means of any other suitable adhesive composition or by means of only mechanical embossing.

In a fourth embodiment, the multi-ply web according to the invention is a two-ply web. The two-ply web comprises a first ply and a second ply which are interconnected, i.e. laminated, in one or more adhesive interconnection zones by means of an adhesive composition comprising a cellulose ether. For example, the cellulose ether may be methyl cellulose. Example of one adhesive composition comprising a cellulose ether is: the methyl cellulose glue MC60, supplied by Henkel KGaA (Düsseldorf, Germany).

The term "cellulose ether" is herein to be understood to include cellulose ethers as well as other structures in which there are certain changes compared to the structure of cellulose ethers, but which have the same "overall structure" as cellulose ethers. One example of a cellulose ether is methyl cellulose.

As mentioned above, adhesive compositions based on a cellulose ether (e.g. methyl cellulose) provide good runnability and ply bonding when used for lamination of plies to a multi-ply web, but cellulose ethers act as a carrier for FWAs. Thereby, cellulose ether counteracts the bleed fastness of FWAs from a multi-ply web of flexible material in the adhesive interconnection zone(s).

However, it has now surprisingly been found that through incorporation of a cationic polymer, selected from the group consisting of aliphatic polyamines, polyethylene imines, modified polyethylene imines, polycondensation products of cationic cyanamide derivatives, polycondensation products of dicyandiamide, cationic polyvinyl amines, polyvinyl formamide, polyvinyl formamide derivatives, polyallyl amines, copolymers between a cationic acrylate and acrylamide, homopolymers of diallyl-dimethyl-ammonium chloride, copolymers between diallyl-dimethyl-ammonium chloride and acrylamide, and cationic modifications of non-ionic polyacrylamide, in the adhesive composition comprising a cellulose ether, the bleed fastness of FWAs from a multi-ply web in the adhesive interconnection zone(s) is improved. The risk of possible bleeding of FWAs from the adhesive interconnection zone(s) comprising a cellulose ether is thereby reduced.

Therefore, the adhesive composition, by which the first and second plies are laminated in the fourth embodiment of the multi-ply web according to the invention, further comprises a cationic polymer. Thus, the adhesive composition utilized for lamination of the plies of the fourth embodiment comprises a cellulose ether and a cationic polymer selected from the group consisting of aliphatic polyamines, polyethylene imines, modified polyethylene imines, polycondensation products of cationic cyanamide derivatives, polycondensation products of dicyandiamide, cationic polyvinyl amines, polyvinyl formamide, polyvinyl formamide derivatives, polyallyl amines, copolymers between a cationic acrylate and acrylamide, homopolymers of diallyl-dimethyl-ammonium chloride, copolymers between diallyl-dimethyl-ammonium chloride and acrylamide, and cationic modifications of non-ionic polyacrylamide.

The cationic polymer may be added to the adhesive composition comprising a cellulose ether. Alternatively, the adhesive composition comprising a cellulose ether may be added to the cationic polymer. Preferably, the cationic polymer is incorporated in the adhesive composition before the plies of the multi-ply web are interconnected by the adhesive composition.

The adhesive composition may comprise, for example, 0.2-3% w/w cationic polymer. Preferably, the adhesive composition comprises 0.5-1.5% w/w cationic polymer. Furthermore, the adhesive composition may comprise, for example, 1-10% w/w of a cellulose ether. Preferably, the adhesive composition comprises 2-5% w/w of a cellulose ether. In one example, the adhesive composition comprises 0.5-1.5% w/w cationic polymer and 2-5% w/w of a cellulose ether. The concentrations of substances provided herein are expressed in weight percentage (% w/w). Unless otherwise stated, these concentrations are measured as dry weights.

The cationic polymer is selected from the group consisting of aliphatic polyamines, polyethylene imines, modified polyethylene imines polycondensation products of cationic cyanamide derivatives, polycondensation products of dicyandiamide, cationic polyvinyl amines, polyvinyl formamide, polyvinyl formamide derivatives, polyallyl amines, copolymers between a cationic acrylate and acrylamide, homopolymers of diallyl-dimethyl-ammonium chloride, copolymers between diallyl-dimethyl-ammonium chloride and acrylamide, and cationic modifications of non-ionic polyacrylamide.

More preferably, the cationic polymer is selected from the group consisting of poly-diallyl-dimethyl-ammonium chloride, aliphatic polyamines, cationic polyvinyl amines, polyvinyl formamide, polyvinyl formamide derivatives, cationic polyacrylamides and polyethylene imines.

The adhesive composition may comprise a cellulose ether and one cationic polymer or it may comprise a cellulose ether and more than one cationic polymer (i.e. at least two different cationic polymers). Alternatively, the adhesive composition may comprise a cellulose ether, at least one cationic polymer and a dye, whereby the adhesive composition is coloured. In still another alternative, the adhesive composition comprises a cellulose ether, at least one cationic polymer and any other suitable constituents such as, for example, viscosity modifiers, anti-foaming agents and preserving agents.

The fact that a multi-ply web, in which the plies are laminated with an adhesive composition comprising a cellulose ether and a cationic polymer, presents an improved bleed fastness of FWAs in the adhesive interconnection zone(s) compared to a corresponding multi-ply web, in which the plies are laminated with a corresponding adhesive composition comprising a cellulose ether but not any cationic polymer, will be shown in the experimental section below.

In a fifth embodiment, the multi-ply web according to the invention is a three-ply web. The fifth embodiment corresponds to the fourth embodiment except for the fact that the multi-ply web comprises one further ply, i.e. it is a three-ply web instead of a two-ply web. The three-ply web comprises a first ply, a second ply and a third ply, whereby the second ply is provided as a middle ply. The first and second plies of the fifth embodiment correspond to the first and second plies of the fourth embodiment. However, the second ply and the third ply are also interconnected, i.e. laminated, in one or more adhesive interconnection zones by means of the adhesive composition comprising a cellulose ether and at least one cationic polymer described in connection with the fourth embodiment.

In a sixth embodiment, the multi-ply web according to the invention is a three-ply web. The sixth embodiment corresponds to the fifth embodiment except for the fact that the second and third plies are not interconnected by means of the adhesive composition comprising a cellulose ether and at least one cationic polymer. Instead the second and third plies are interconnected by means of any other suitable adhesive composition or by means of only mechanical embossing, whereby the mechanical joining of the plies occurs in the embossing sites.

In further embodiments, the multi-ply web according to the invention comprises more than three plies, whereby all plies are laminated by means of the adhesive composition comprising a cellulose ether and at least one cationic polymer described in connection with the fourth embodiment.

In alternative embodiments, the multi-ply web according to the invention comprises more than three plies, whereby only some of the plies are laminated by means of the adhesive composition comprising a cellulose ether and at least one cationic polymer described in connection with the fourth embodiment whereas the other plies are laminated by means of any other suitable adhesive composition or by means of only mechanical embossing.

During production of the multi-ply web according to the invention, the adhesive composition comprising polyvinyl alcohol and a cationic polymer or the adhesive composition comprising a cellulose ether and a cationic polymer may be provided on one ply, after which that ply is joined with another ply or other plies in, for example, a press nip between two rolls. The adhesive composition may be applied all over a ply or only in regions, for example, dots or lines of a ply, or only along the edges of a ply so as to provide one or more adhesive interconnection zones. The adhesive composition may also be applied in a predetermined pattern on a ply. For example, it may be applied in continuous lines forming a network. Any suitable known methods for application of glue on one ply of flexible material and joining that ply with another ply or other plies of flexible material may be utilized in production of the multi-ply web according to the invention. One example of a typical glue concentration is 0.05-0.2 g/m² (dry weight) in a multi-ply tissue product. Furthermore, the adhesive composition may also be applied on at least one side of each ply of a multi-ply web according to the invention before lamination. Examples of suitable methods for application of the adhesive composition are flexoprinting and application during embossing lamination.

In case the adhesive composition is provided in discrete sites, such as dots or lines, the plies laminated with the adhesive composition are free and not attached to each other between the sites. Thus, empty spaces are created between the sites which increase the bulk and absorption capacity of the material, properties that are important for e.g. soft paper.

Furthermore, before the plies are laminated to the multi-ply web according to the invention they may be smooth or may have a three-dimensional structure provided earlier in the production process, for example during forming, dewatering and/or drying of the plies. A three-dimensional structure may also be provided by embossing the dry plies before lamination. The laminated multi-ply product may also be embossed after the lamination process.

The plies may be embossed by any suitable known embossing technique. It is known through, for example, EP-A-796 727 to first emboss two paper plies in a three-dimensional structure with alternating raised and recessed portions, after which glue is applied to one of the plies and the two plies are joined in a press nip between two embossing rolls, so that the raised portions of the respective plies are glued to each other. A similar embossing procedure is shown in EP-A-738 588, according to which the glue also has a colouring effect.

In WO 95/08671 there is enclosed an example of so-called nested embossing, in which the two individually embossed plies are combined and joined with the raised portions of one ply nesting into the recessed portions of the opposite ply.

Through US-A-5,443,889 there is known a procedure for laminating two paper plies, which are fed over a pattern roll each, said pattern rolls having alternating raised and recessed portions and where glue is applied to one ply while this is led over the roll. The two paper plies are then glued together in a nip between the two pattern rolls, which are in register with each other so that a joining and compression of the paper plies occurs in a pattern corresponding to the raised portions of the pattern rolls.

Three or more plies may of course also be embossed and laminated with the methods described above.

Any suitable combination of different embossing patterns for the different plies may be utilized. Multi-ply webs having different structures on opposite sides may be created if the two outer plies have different embossing structures, such as one coarser side and one smoother side. So-called microquilted embossing patterns may also be used. One or more plies may further be unembossed. In the case of a two-ply web, a two-sided web is obtained if one ply is embossed and the other is unembossed or has a different embossing structure.

However, the embossing patterns used for the different plies may also be the same. In this case the plies may be embossed jointly and then separated from each other before being laminated. They may also be separately embossed before lamination.

Different kinds of flexible material with different properties with respect to absorption capacity, basis weight, manufacturing technique, fiber composition, chemical additives may be used in the different plies.

The multi-ply web according to the present invention may be converted to any desired product, such as toilet paper, kitchen paper, napkins, serviettes, handkerchiefs, paper towels, towels, wipes, different types of cloths, make-up removal towels. facial tissue, cosmetic tissue, baby wipes, kitchen towels, kitchen wipes, cleaning wipes, industrial wiping material or any other wiping or personal hygiene material. Furthermore, the multiply web according to the present invention may be converted to, for example, a rolled or folded product. The web-shaped material of such a product may be e.g. a wet strong paper, e.g. a paper to which a wet strength agent has been added. Furthermore, the web-shaped material of such a product may be e.g. tissue paper.

Furthermore, the present invention relates to a method for improving the bleed fastness of a fluorescent whitening agent in one or more adhesive interconnection zones of a multi-ply web of flexible material, such as paper and nonwoven material, whereby the multi-ply web comprises at least a first ply and a second ply which are interconnected in the one or more adhesive interconnection zones by means of an adhesive composition comprising polyvinyl alcohol. The method comprises a step of incorporating a cationic polymer, i.e. at least one cationic polymer, in the adhesive composition comprising polyvinyl alcohol, wherein said cationic polymer is selected from the group consisting of aliphatic polyamines, polyethylene imines, modified polyethylene imines, polycondensation products of cationic cyanamide derivatives, polycondensation products of dicyandiamide, cationic polyvinyl amines, polyvinyl formamide, polyvinyl formamide derivatives, polyallyl amines, copolymers between a cationic acrylate and acrylamide, homopolymers of diallyl-dimethyl-ammonium chloride, copolymers between diallyl-dimethyl-ammonium chloride and acrylamide, and cationic modifications of non-ionic polyacrylamide. Preferably, the step of incorporating a cationic polymer in the adhesive composition is performed before the plies of the multi-ply web are interconnected by the adhesive composition. The cationic polymer may be added to the adhesive composition comprising polyvinyl alcohol. Alternatively, the adhesive composition comprising polyvinyl alcohol maybe added to the cationic polymer.

The step of incorporating a cationic polymer in the adhesive composition may comprise providing the adhesive composition with, for example, 0.2-4% w/w cationic polymer. Preferably, the adhesive composition is provided with 1-2% w/w cationic polymer. Furthermore, the adhesive composition may comprise 2-12% w/w polyvinyl alcohol, preferably 4-6% w/w polyvinyl alcohol. In one example the adhesive composition comprises 4-6% w/w polyvinyl alcohol and is provided with 1-2% w/w cationic polymer.

In addition, the cationic polymer(s) may be incorporated in the adhesive composition at some time before the adhesive composition is utilized for lamination. The cationic polymer may be any of the above mentioned cationic polymers.

In addition, the present invention relates to a method for improving the bleed fastness of a fluorescent whitening agent in one or more adhesive interconnection zones of a multi-ply web of flexible material, such as paper and nonwoven material, whereby the multi-ply web comprises at least a first ply and a second ply which are interconnected in the one or more adhesive interconnection zones by means of an adhesive composition comprising a cellulose ether. The method comprises a step of incorporating a cationic polymer, i.e. at least one cationic polymer, in the adhesive composition comprising a cellulose ether, wherein said cationic polymer is selected from the group consisting of aliphatic polyamines, polyethylene imines, modified polyethylene imines, polycondensation products of cationic cyanamide derivatives, polycondensation products of dicyandiamide, cationic polyvinyl amines, polyvinyl formamide, polyvinyl formamide derivatives, polyallyl amines, copolymers between a cationic acrylate and acrylamide, homopolymers of diallyl-dimethyl-ammonium chloride, copolymers between diallyl-dimethyl-ammonium chloride and acrylamide, and cationic modifications of non-ionic polyacrylamide. Preferably, the step of incorporating a cationic polymer in the adhesive composition is performed before the plies of the multi-ply web are interconnected by the adhesive composition. The cationic polymer may be added to the adhesive composition comprising a cellulose ether. Alternatively, the adhesive composition comprising a cellulose ether may be added to the cationic polymer.

The step of incorporating a cationic polymer in the adhesive composition may comprise providing the adhesive composition with, for example, 0.2-3% w/w cationic polymer. Preferably, the adhesive composition is provided with 0.5-1.5% w/w cationic polymer. Furthermore, the adhesive composition may comprise 1-10% w/w of a cellulose ether, preferably 2-5% w/w of a cellulose ether. In one example the adhesive composition comprises 2-5% w/w of a cellulose ether and is provided with 0.5-1.5% w/w cationic polymer. In addition, the cationic polymer(s) may be incorporated in the adhesive composition at some time before the adhesive composition is utilized for lamination. The cationic polymer may be any of the above mentioned cationic polymers.

Furthermore, the fact that the risk of undesired bleeding of FWAs from the adhesive interconnection zone(s) of a multi-ply web, in which the plies are laminated by means of an adhesive composition comprising polyvinyl alcohol or a cellulose ether, may be reduced through the incorporation of a cationic polymer, selected from the group consisting of aliphatic polyamines, polyethylene imines, modified polyethylene imines, polycondensation products of cationic cyanamide derivatives, polycondensation products of dicyandiamide, cationic polyvinyl amines, polyvinyl formamide, polyvinyl formamide derivatives, polyallyl amines, copolymers between a cationic acrylate and acrylamide, homopolymers of diallyl-dimethyl-ammonium chloride, copolymers between diallyl-dimethyl-ammonium chloride and acrylamide, and cationic modifications of non-ionic polyacrylamide, in the adhesive composition implies that such a risk of undesired bleeding of FWAs may be reduced without any expensive treatments or additives.

Another advantage is that incorporation of a cationic polymer, selected from the group consisting of aliphatic polyamines, polyethylene imines, modified polyethylene imines, polycondensation products of cationic cyanamide derivatives, polycondensation products of dicyandiamide, cationic polyvinyl amines, polyvinyl formamide, polyvinyl formamide derivatives, polyallyl amines, copolymers between a cationic acrylate and acrylamide, homopolymers of diallyl-dimethyl-ammonium chloride, copolymers between diallyl-dimethyl-ammonium chloride and acrylamide, and cationic modifications of non-ionic polyacrylamide, in the adhesive composition comprising polyvinyl alcohol or a cellulose ether is a neat way of achieving an improved bleed fastness of FWAs. This is due to the fact that the cationic polymer is incorporated in the adhesive composition utilized for lamination, which has to be applied anyway. Thus, no extra steps of addition of additives to a multi-ply web or extra steps of treatment of a multi-ply web, except for the application of the adhesive composition utilized for lamination, are needed in order to achieve an improved bleed fastness of FWAs.

Furthermore, the present invention only concerns incorporation of a cationic polymer, selected from the group consisting of aliphatic polyamines, polyethylene imines, modified polyethylene imines, polycondensation products of cationic cyanamide derivatives, polycondensation products of dicyandiamide, cationic polyvinyl amines, polyvinyl formamide, polyvinyl formamide derivatives, polyallyl amines, copolymers between a cationic acrylate and acrylamide, homopolymers of diallyl-dimethyl-ammonium chloride, copolymers between diallyl-dimethyl-ammonium chloride and acrylamide, and cationic modifications of non-ionic polyacrylamide, in the adhesive composition utilized for lamination of plies, i.e. it does not concern incorporation of a cationic polymer in the pulp, in order to provide an improved bleed fastness of FWAs in the adhesive interconnection zone(s).

### EXPERIMENTAL

### EXAMPLE 1

### Objective

The objective of Example 1 was to test the FWA bleed fastness of simulated two-ply products (i.e. simulated products of a multi-ply web), in which the plies were interconnected by means of an adhesive composition comprising polyvinyl alcohol and a cationic polymer. The determined FWA bleed fastness was to be compared with the FWA bleed fastness of simulated two-ply products, in which the plies were interconnected by means of an adhesive composition comprising polyvinyl alcohol but not a cationic polymer. In Example 1, the adhesive composition was applied to the plies by means of glue gravure printing.

### Materials and methods

Example 1 comprises a first and a second experiment in which simulated two-ply tissue products were prepared and the FWA bleed fastness thereof was tested. In the first experiment, the FWA bleed fastness of simulated two-ply products, in which the plies were gravure printed with one of five different utilized gravure volumes of a polyvinyl alcohol glue (reference glue solution), was tested. In the second experiment, the FWA bleed fastness of simulated two-ply products, in which the plies were gravure printed with a glue mixture comprising the polyvinyl alcohol glue and a cationic polymer, was tested. The first and second experiments will be described below.

In the first and second experiments, recycled dry creped tissue paper made from a raw material containing high amounts of FWAs was utilized for preparing simulated two-ply tissue products. The paper basis weight was 20 gsm. In order to obtain a measure of the content of FWAs in the paper, i.e. to confirm that the paper really contained high amounts of FWAs, brightness measurements were performed on two stacks of paper (reference paper 1 and 2). The brightness measurements were made with the instrument Color Tech, supplied by Technidyne, Inc. The optical properties were measured according to ISO EN 12625-7. Results of the brightness measurements on the reference paper (ISO brightness, D65 UV Included, D65 UV Excluded and D65 10 FWA) are shown in Table 1A. The latter data is the delta between UV included and UV excluded and is a measure of the content of FWA in the reference paper. For comparison, the D65 10 FWA value for tissue paper made of virgin pulp is about 0, whereas the D65 10 FWA value for tissue paper made of recycled office paper is 8-16.

**Table 1 A. Brightness data for reference paper.**

| | Reference paper 1 | Reference paper 2 |
|---|---|---|
| ISO Brightness | 73.8 | 76.1 |
| D65 10 UV included | 79.7 | 82.4 |
| D65 10 UV excluded | 68.1 | 70.7 |
| D65 10 FWA (Δ UV incl.-UV excl.) | 11.6 | 11.7 |

### First experiment

In the first experiment, two sheets of the above mentioned recycled dry creped tissue paper having the size 15 x 20 cm were prepared for glue gravure printing. As glue for the glue gravure printing, the polyvinyl alcohol glue Kappasil 260, supplied by Kapp-Chemie GmbH (Miehlen, Germany), was utilized. It was diluted with water in order to prepare a reference glue solution having a concentration of 6%. The reference glue solution was provided with 0.4% of violet ink concentrate Kappaflex P1/10063, supplied by Kapp-Chemie GmbH (Miehlen, Germany), in order to make the glue print visible on the tissue paper, i.e. Kappaflex P1/10063 was utilized as a marker. As mentioned above, the concentrations of substances provided herein are expressed in weight percentage (% w/w). Unless otherwise stated, these concentrations are measured as dry weights.

Glue gravure printing was performed by means of a "Labratester automatic", supplied by Norbert Schläfli Machinen (Zofingen, Switzerland). A standard gravure printing plate having areas corresponding to gravure volumes of 0.7 ml/m², 3.7 ml/m², 6.8 ml/m², 10.3 ml/m² and 13 ml/m², respectively, was utilized. The size of each area was 2.5 x 12 cm.

About 1 ml of the reference glue solution was applied onto the gravure printing plate for printing each of the sheets. Each sheet was printed two times in order to simulate the amount of glue applied in a tissue lamination process where a gravure anilox roll of typically 20-25 ml/m² is used for the glue transfer. After the gravure printing, each sheet was folded once such that a folded sheet was formed with the glue print on the inside. Each sheet was folded such that regions being printed with the same gravure volume were joined. Thus, each sheet was folded such that a part of the area being printed with the gravure volume 0.7 ml/m² was joined with another part of the area being printed with the gravure volume 0.7 ml/m², such that a part of the area being printed with the gravure volume 3.7 ml/m² was joined with another part of the area being printed with the gravure volume 3.7 ml/m², etc. Samples of 2 x 5 cm were then punched out from the parts of the folded sheets comprising the respectively printed areas. Accordingly, simulated two-ply tissue products were then formed comprising two paper samples of 2 x 5 cm, which were printed with the same gravure volume and which were joined such that the glue print was provided on the inside, i.e. between the two plies. Thereby, simulated two-ply tissue products with glue prints corresponding to gravure volumes of 0.7 ml/m², 3.7 ml/m², 6.8 ml/m², 10.3 ml/m² and 13 ml/m², respectively, were prepared in the first experiment. From each printed sheet one simulated product was prepared for each gravure volume. Furthermore, since two sheets were utilized, two simulated products were prepared for each gravure volume.

FWA bleed fastness of the simulated two-ply tissue products was thereafter evaluated, partly in accordance with EN648 procedure B. The simulated products were brought into contact with glass fibre papers, which had been saturated with water. The glass fibre papers had the size of 60 x 90 mm and a basis weight of 70 gsm. One glass fibre paper was positioned on each side of a simulated product, and the glass fibre papers and the simulated product were placed under a load of 1 kg for 10 minutes. If any bleeding occurred, FWAs were then transferred to the glass fibre papers. The staining of the glass fibre papers, i.e. the amount of FWAs that had been transferred to the glass fibre papers, was then evaluated by analyzing the fluorescence of the glass fibre papers under UV-light.

According to EN648 procedure B, the fluorescence of the glass fibre papers is to be evaluated by comparison with a series of fluorescent whitened comparison papers. A comparison scale of 1-5 is to be utilized according to EN648 procedure B for reporting the results. The grade 1 means that a high bleeding has occurred, whereas the grade 5 means that no bleeding at all, or essentially no bleeding, has occurred. It should be noted that faint fluorescence (small bright spots) should not be determined as bleeding of FWAs according to EN648 procedure B. This is because faint fluorescence may be caused by other components in the paper, at the edges of the sample or from dust in the air. Therefore, fluorescence less than corresponding with grade 4 is not an indication of bleeding of FWAs and shall be evaluated as grade 5.

However, since the evaluation of the fluorescence according to EN648 procedure B is a highly subjective procedure, i.e. the assignment of the respective grades (1-5) to the respective simulated two-ply products depends on the person performing the evaluation, the fluorescence of the glass fibre papers was evaluated by analyzing greyscale intensity by image analysis. The glass fibre papers were then placed 45 cm below UV-lamps providing UV-A-light (365 nm) in a closed UV-light cabinet (i.e. the glass fibre papers were screened from other light). Images of the glass fibre papers were taken during the UV-light exposure with a Canon Powershot A620 digital camera. The camera was placed on top of the UV-light cabinet right above the glass fibre papers and images were taken through a 50 mm diameter opening at a distance of 50 cm from the glass fibre papers. In order to obtain usable images in the dark surroundings, the largest diaphragm opening of 2.8, a long shutter time of ¼ seconds and an ISO sensitivity of 100 were utilized. Images were then converted to greyscale with Image Pro-Plus 3.0 image analysis software, and greyscale intensity of the lightest part, corresponding to an area of 10 x 30 mm, of the glass fibre papers was recorded. By means of this procedure, a more objective and more sensitive evaluation of the intensity of the fluorescence was obtained. Greyscale values between 1 and 255 were utilized. The greyscale value "1" means black and the greyscale value "255" means white. Thus, a high greyscale value means that high bleeding has occurred, whereas a low greyscale value means that low or no bleeding at all has occurred. The results of the greyscale intensity evaluation are shown in Table 1B.

The procedure utilized for the FWA bleed fastness test resulted in two glass fibre papers to be evaluated for each simulated product. In addition, since two simulated products were prepared for each gravure volume, the FWA bleed fastness test resulted in four glass fibre papers for each utilized gravure volume. The greyscale intensity values shown in Table 1 B for the respective simulated products are a mean value of the greyscale intensity of the four glass fibre papers associated with the respective simulated products.

In order to report the results of the FWA bleed fastness test with the grades 1-5 of the comparison scale according to EN648 procedure B described above, but with elimination of the subjective assignment of the respective grades to the respective simulated two-ply products, the greyscale intensity values were converted to the comparison grades 1-5 utilized in EN648 procedure B by utilizing the conversions according to Table 1C. The converted FWA bleed fastness grades (1-5) are reported in Table 1 B. For example, in case a simulated product was determined to have a greyscale intensity of < 25, the product was assigned grade "5" according to the comparison scale. In case a simulated product was determined to have a greyscale intensity of 25-34, the product was assigned grade "4" according to the comparison scale, etc.

In addition, the FWA bleed fastness was also determined for two simulated two-ply products without any glue. These products were respectively prepared by joining two samples of the above described recycled dry creped tissue paper having the size 2 x 5 cm. However, these samples were not provided with any glue. The FWA bleed fastness was then evaluated according to the above procedure and the results are shown in Table 1B.

**Table 1B FWA bleed fastness at bonding points of simulated two-ply products comprising plies being lab gravure printed with the reference glue solution.**

| Glue print of the plies of the simulated product | Greyscale Intensity | FWA bleed fastness (1-5) |
|---|---|---|
| No glue | 21 | 5 |
| 0.7 ml/m² glue print | 35 | 3 |
| 3.7 ml/m² glue print | 82 | 2 |
| 6.8 ml/m² glue print | 111 | 1 |
| 10.3 ml/m² glue print | 131 | 1 |
| 13 ml/m² glue print | 139 | 1 |

**Table 1C Conversion of greyscale intensity to FWA bleed fastness grades**

| Greyscale intensity | FWA bleed fastness (1-5) |
|---|---|
| < 25 | 5 |
| 25 - 34 | 4 |
| 35 - 49 | 3 |
| 50 - 89 | 2 |
| > 89 | 1 |

For further FWA bleed fastness testing, it was decided to utilize gravure printing with 6.8 and 10.3 ml/m², respectively, two times. These prints were chosen as the colour intensity of these prints was similar to the glue print obtained with the same glue composition from glue lamination in a tissue converting machine.

### Second experiment

In the second experiment, sheets of the above mentioned recycled dry creped tissue paper having the size 15 x 20 cm were prepared for glue gravure printing. As glue for the glue gravure printing, the polyvinyl alcohol glue Kappasil 260, supplied by Kapp-Chemie GmbH (Miehlen, Germany), was utilized. It was diluted with water in order to prepare a reference glue solution having a concentration of 6%. The reference glue solution was provided with 0.4% of violet ink concentrate Kappaflex P1/10063, supplied by Kapp-Chemie GmbH (Miehlen, Germany), in order to make the glue print visible on the tissue paper, i.e. Kappaflex P1/10063 was utilized as a marker.

In addition, a number of glue mixtures were prepared by adding cationic polymer additives to the reference glue solution at various concentrations. The prepared glue mixtures comprised the following respective additives: Tinofix AP (0.25%, 0.5%, 1.0%, 2.0%), Alcofix 160 (0.25%, 0,5%, 1.0%, 2.0%), Praestafix C160 (1 %), Retaminol K (2%), Levogen 1063 (1%), Fennofix 50 (2%), Alcofix 169 (0.25%, 0.5%, 1.0%, 1,5%, 2.0%), Alcofix 110 (0.5%, 1.0%, 1.5%, 2.0%), Alcofix 111 (1.0%), Fennofix 41 (0.5%, 1.0%, 1.5%, 2.0%), Fennofix 240 (2%), Praestafix C140 (1%), Alcofix 4300 (1%), Catiofast PR 8248 X (1%), Catiofast VFH (1%), Catiofast VMP (1%, 2%), Lupasol HF (1%, 2%), Lupasol PS (1%, 2%) and Lupasol SK (1%, 2%).

Aliphatic polyamines Tinofix AP and Alcofix 160 (made by a polycondensation reaction of dimethyl amine, ethylene diamine, and epichlorohydrin) were supplied by Ciba Speciality Chemicals (Gothenburg, Sweden); quaternary aliphatic polyamine Praestafix C160 was supplied by Ashland Deutschland GmbH (Krefeld, Germany); aliphatic polyamines Fennofix 50 and Retaminol K were supplied by Kemira (Leverkusen, Germany); aliphatic polyamine Levogen 1063 (made by a polycondensation reaction of dimethyl amine and epichlorohydrin) was supplied by Kemira (Göteborg, Sweden); poly-DADMACs (poly-diallyl-dimethyl-ammonium chloride) Alcofix 169, Alcofix 110 and Alcofix 111 were supplied by CIBA Speciality Chemicals (Gothenburg, Sweden); polyamide based copolymer Alcofix 4300 was supplied by CIBA Speciality Chemicals (Gothenburg, Sweden); cationic polyacrylic amide based copolymer Praestafix C140 was supplied by Ashland Deutschland GmbH (Krefeld, Germany); cationic polyacrylic amide Fennofix 240 was supplied by Kemira, (Leverkusen, Germany); poly-DADMAC Fennofix 41 was supplied by Kemira (Leverhausen, Germany); high cationic charged polyvinyl amines Catiofast PR 8248X and Catiofast VFH (made from poly(N-vinyl formamide)) were supplied by BASF via BTC Nordic (Gothenburg, Sweden); weak cationic charged polyvinyl amine Catiofast VMP (made from poly(N-vinyl formamide)) was supplied by BASF via BTC Nordic (Gothenburg, Sweden); cationic polyethylene imines Lupasol HF, Lupasol PS, and Lupasol SK were supplied by BASF GmbH (Ludwigshafen, Germany). The glue mixtures were provided with 0.4% of violet ink concentrate Kappaflex P1/10063, supplied by Kapp-Chemie GmbH (Miehlen, Germany), in order to make the glue print visible on the tissue paper, i.e. Kappaflex P1/10063 was utilized as a marker.

In the second experiment sheets of the recycled dry creped tissue paper were gravure printed according to the procedure described in the first experiment. Thus, 1 ml of glue mixture was applied onto the gravure printing plate for printing one of the prepared sheets of the recycled dry creped tissue paper and each sheet was printed twice. One sheet was printed for each glue mixture and one sheet was printed with the reference glue solution.

After the gravure printing, each sheet was folded once such that a folded sheet was formed with the glue print on the inside. Each sheet was folded such that the area being printed with the gravure volume 6.8 ml/m² was essentially joined with the area being printed with the gravure volume 10.3 ml/m². Two samples of 2 x 5 cm were the punched out from each folded sheet at the area of the combined 6.8 ml/m² and 10.3 ml/m² glue print. Thereby, two simulated two-ply tissue products were formed from each sheet. Each product comprised one paper sample of 2 x 5 cm being printed with the gravure volume 6.8 ml/m² and one paper sample of 2 x 5 cm being printed with the gravure volume 10.3 ml/m², and the glue prints were provided between the samples (i.e. plies). Accordingly, two simulated products were prepared for each glue mixture and two simulated products were prepared for the reference glue solution. The FWA bleed fastness of the simulated products was in the second experiment evaluated in the same way as in the first experiment. Thus, the simulated two-ply products were brought into contact with water saturated glass fibre papers according to the procedure in the first experiment. Thereafter, the fluorescence of the glass fibre papers was evaluated by analyzing greyscale intensity and the greyscale intensity was converted to an FWA bleed fastness grade according to the procedure in the first experiment. The results of the second experiment are shown in Tables 1 D-1 H.

The procedure utilized for the FWA bleed fastness test resulted in two glass fibre papers to be evaluated for each simulated product. In addition, since two simulated products were prepared for each glue mixture/reference glue solution, the FWA bleed fastness test resulted in four glass fibre papers for each utilized glue mixture/reference glue solution. The greyscale intensity values shown in Tables 1 D-1 H for the respective simulated products are a mean value of the greyscale intensity of the four glass fibre papers associated with the respective simulated products.

In addition, the FWA bleed fastness was also determined for simulated two-ply products without any glue. These products were respectively prepared by joining two samples of the above described recycled dry creped tissue paper having the size 2 x 5 cm. However, these samples were not provided with any glue. The FWA bleed fastness was then evaluated according to the same procedure as the simulated products provided with glue.

**Table 1D FWA bleed fastness at bonding points of simulated two-ply tissue products comprising plies being gravure printed with reference glue solution (ref. glue sol.) or with a glue mixture comprising the reference glue solution and a cationic polymer (a cationic aliphatic polyamine).**

| Utilized glue | Greyscale Intensity | FWA bleed fastness (1-5) |
|---|---|---|
| Reference glue solution | 112 | 1 |
| Ref. glue sol. + 0.25% Tinofix AP | 56 | 2 |
| Ref. glue sol. + 0.5% Tinofix AP | 40 | 3 |
| Ref. glue sol. + 1.0% Tinofix AP | 25 | 4 |
| Ref. glue sol. + 2.0% Tinofix AP | 23 | 5 |
| Ref. glue sol. + 0.25% Alcofix 160 | 53 | 2 |
| Ref. glue sol. + 0.5% Alcofix 160 | 41 | 3 |
| Ref. glue sol + 1.0% Alcofix 160 | 25 | 4 |
| Ref. glue sol. + 2.0% Alcofix 160 | 26 | 4 |
| Ref. glue sol. + 1 % Praestafix C160 | 65 | 2 |
| Ref. glue sol. + 2% Retaminol K | 35 | 3 |
| Ref. glue sol. + 1% Levogen 1063 | 45 | 3 |
| Ref. glue sol. + 2% Fennofix 50 | 31 | 4 |
| Reference paper (no glue) | 22 | 5 |

**Table 1E FWA bleed fastness at bonding points of simulated two-ply tissue products comprising plies being gravure printed with reference glue solution (ref. glue sol.) or with a glue mixture comprising the reference glue solution and a cationic polymer (a polyDADMAC).**

| Utilized glue | Greyscale Intensity | FWA bleed fastness (1-5) |
|---|---|---|
| Reference glue solution | 105 | 1 |
| Ref. glue sol. + 0.25% Alcofix 169 | 48 | 3 |
| Ref. glue sol. + 0.5% Alcofix 169 | 29 | 4 |
| Ref. glue sol. + 1.0 % Alcofix 169 | 28 | 4 |
| Ref. glue sol. + 1.5% Alcofix 169 | 20 | 5 |
| Ref. glue sol. + 2.0% Alcofix 169 | 17 | 5 |
| Ref. glue sol. + 0.5% Alcofix 110 | 29 | 4 |
| Ref. glue sol. + 1.0% Alcofix 110 | 26 | 4 |
| Ref. glue sol. + 1.5% Alcofix 110 | 23 | 5 |
| Ref. glue sol. + 2.0% Alcofix 110 | 20 | 5 |
| Ref. glue sol. + 1.0% Alcofix 111 | 21 | 5 |
| Ref. glue sol. + 0.5% Fennofix 41 | 33 | 4 |
| Ref. glue sol. + 1.0% Fennofix 41 | 30 | 4 |
| Ref. glue sol. + 1.5% Fennofix 41 | 21 | 5 |
| Ref. glue sol. + 2.0% Fennofix 41 | 19 | 5 |
| Reference paper (no glue) | 21 | 5 |

**Table 1F FWA bleed fastness at bonding points of simulated two-ply tissue products comprising plies being gravure printed with reference glue solution (ref. glue sol.) or with a glue mixture comprising the reference glue solution and a cationic polymer (a cationic polyacrylic amide, a cationic polyacrylic amide copolymer or a polyamide based copolymer).**

| Utilized glue | Greyscale Intensity | FWA bleed fastness (1-5) |
|---|---|---|
| Reference glue solution | 112 | 1 |
| Ref. glue sol. + 2% Fennofix 240 | 22 | 5 |
| Ref. glue sol. + 1 % Praestafix C140 | 26 | 4 |
| Ref. glue sol. + 1 % Alcofix 4300 | 24 | 5 |
| Reference paper (no glue) | 21 | 5 |

**Table 1G FWA bleed fastness at bonding points of simulated two-ply tissue products comprising plies being gravure printed with reference glue solution (ref. glue sol.) or with a glue mixture comprising the reference glue solution and a cationic polymer (a cationic charged polyvinyl amine).**

| Utilized glue | Greyscale Intensity | FWA bleed fastness (1-5) |
|---|---|---|
| Reference glue solution | 112 | 1 |
| Ref. glue sol. + 1% Catiofast PR 8248 X | 125 | 1 |
| Ref. glue sol. + 1 % Catiofast VFH | 57 | 2 |
| Ref. glue sol. + 1% Catiofast VMP | 33 | 4 |
| Ref. glue sol. + 2% Catiofast VMP | 21 | 5 |
| Reference paper (no glue) | 22 | 5 |

**Table 1 H FWA bleed fastness at bonding points of simulated two-ply tissue products comprising plies being gravure printed with reference glue solution (ref. glue sol.) or with a glue mixture comprising the reference glue solution and a cationic polymer (a cationic polyethylene-imine).**

| Utilized glue | Greyscale Intensity | FWA bleed fastness (1-5) |
|---|---|---|
| Reference glue | 112 | 1 |
| Ref. glue sol. + 1% Lupasol HF | 29 | 4 |
| Ref. glue sol. + 2% Lupasol HF | 24 | 5 |
| Ref. glue sol. + 1% Lupasol PS | 31 | 4 |
| Ref. glue sol. + 2% Lupasol PS | 21 | 5 |
| Ref. glue sol. + 1% Lupasol SK | 45 | 3 |
| Ref. glue sol. + 2% Lupasol SK | 36 | 3 |
| Reference paper (no glue) | 22 | 5 |

### Conclusions

The results of the FWA bleed fastness tests shown in Tables 1 D-1 H indicate that the addition of a cationic polymer to a polyvinyl alcohol glue will result in a significant improvement of the FWA bleed fastness. All tested cationic polymers resulted in a significant improvement of the FWA bleed fastness, except Catiofast PR 8248 X (see a possible explanation for that below). However, some cationic polymers and concentrations thereof turned out to be more efficient than others (see Tables 1D-1H).

The aliphatic polyamines Tinofix AP, Alcofix 160 and Levogen 1063 behaved in a similar manner and FWA bleed fastness was improved from 1 to a strong 3 or 4 when 1 % was added to the reference glue solution. 2% Fennofix resulted in improvement to grade "4".

The poly-DADMACs Alcofix 110, 111 and 169 and Fennofix 41 seem to be somewhat more effective and all reached level 4 or 5 when 0.5-2 % was added to the reference glue solution.

The polyamide based copolymer Alcofix 4300, the cationic polyacrylic amide Fennofix 240 and the cationic polyacrylic amide based copolymer Praestafix C140 also worked well.

With Catiofast PR 8248X no improvement of the FWA bleed fastness was obtained. Catiofast PR 8248X has a very high molecular weight and is a highly charged cationic polyvinyl amine. Compared with all other chemicals used Catiofast PR8248 X was supplied as a pale yellow milky dispersion at a relatively high solids concentration of 44% (compared with 21% and 16% for Catiofast VFH and Catiofast VMP, respectively). As this polymer was supplied in dispersion it could probably not interact with the polyvinyl alcohol and the FWA as polymers in solution. This might explain the poor effect obtained by Catiofast PR 8248X. With Catiofast VFH and VMP an improvement of the bleed fastness was obtained.

In addition the cationic polyethylene imines Lupasol HF, Lupasol PS and Lupasol SK provided an improvement of the FWA bleed fastness.

### EXAMPLE 2

### Objective

The objective of Example 2 was to test the FWA bleed fastness of simulated two-ply products (i.e. simulated products of a multi-ply web), in which the plies were interconnected by means of an adhesive composition comprising polyvinyl alcohol and a cationic polymer. The determined FWA bleed fastness was to be compared with the FWA bleed fastness of simulated two-ply products, in which the plies were interconnected by means of an adhesive composition comprising polyvinyl alcohol but not a cationic polymer. In Example 2, the adhesive composition was applied to the plies by means of flexoprinting.

### Materials and methods

In Example 2, recycled dry creped tissue paper made from a raw material containing high amounts of FWAs was utilized for preparing simulated two-ply tissue products. The paper basis weight was 20 gsm. In order to obtain a measure of the content of FWAs in the paper, i.e. to confirm that the paper really contained high amounts of FWAs, brightness measurements were performed on a stack of paper (reference paper) according to the procedure described in Example 1. Results of the brightness measurements are shown in Table 2A below.

**Table 2A Brightness data for the reference paper.**

| | Reference paper |
|---|---|
| ISO Brightness | 76.5 |
| D65 10 UV included | 83.3 |
| D65 10 UV excluded | 70.7 |
| D65 10 FWA (Δ UV incl.-UV excl.) | 12.7 |

A 30 cm wide roll of the recycled dry creped tissue paper was prepared for flexoprinting. As glue for the flexoprinting, the polyvinyl alcohol tissue lamination glue Gummi 88Z3 supplied by Türmerleim GmbH, Ludwigshafen, Germany at 15% solids concentration was utilized. It was diluted with water in order to prepare a reference glue solution with a glue concentration of 6%. A violet ink Kappaflex P1/10063 supplied by Kapp-Chemie, Miehlen, Germany was added at 0.4% to make the glue print visible and to facilitate take out of samples. In addition, nine different glue mixtures were prepared by adding cationic polymers to the reference glue solution at a concentration of 1%. The following respective additives were added to the reference glue solution at 1 %: Tinofix AP, Alcofix 160, Alcofix 169, Alcofix 110, Alcofix 111, Alcofix 4300, Catiofast PR 8248X, Catiofast VFH and Catiofast VMP. Furthermore, one glue mixture comprising 3% of Tinofix AP was prepared by adding 3% Tinofix AP to the reference glue solution. Suppliers of the respective cationic polymers were as described in Example 1. The glue mixtures were also provided with 0.4% violet ink Kappaflex P1/10063 supplied by Kapp-Chemie, Miehlen, Germany.

The flexoprinting was performed by means of a lab flexoprint equipment F.P. 100/300 supplied by Saueressig GmbH (Vreden, Germany). An anilox roll with a carrying over volume of 13.9 ml/m² was used together with a flexoprint cliché with a 5-100% halftone dot pattern. The glue mixtures and the reference glue solution were respectively utilized for flexoprinting the roll of the recycled dry creped tissue paper.

After the flexoprinting, paper samples of 2 x 5 cm were punched out from the printed paper where 85-100% print was obtained and simulated two-ply tissue products were prepared from the paper samples. The respective simulated two-ply tissue products were prepared by joining two samples being printed with the same glue mixture or two samples being printed with the reference glue solution. The samples were joined such that the glue print was provided on the inside, i.e. between the two plies. Two simulated products were prepared for each glue mixture and two simulated products were prepared for the reference glue solution.

The FWA bleed fastness of the simulated two-ply tissue products were evaluated in the same way as in Example 1. Thus, the simulated two-ply products were brought into contact with water saturated glass fibre papers according to the procedure in Example 1. Thereafter, the fluorescence of the glass fibre papers was evaluated by analyzing grey scale intensity and the grey scale intensity was converted to an FWA bleed fastness grade according to the procedure in Example 1. In Table 2B results of the FWA bleed fastness tests are shown for simulated two-ply tissue products in which the plies were flexoprinted with reference glue solution and the respective glue mixtures.

Since two simulated products were prepared for each glue mixture/reference glue solution, the FWA bleed fastness test resulted in four glass fibre papers for each glue mixture/reference glue solution. The greyscale intensity values shown in Table 2B for the respective simulated products are a mean value of the greyscale intensity of the four glass fibre papers associated with the respective simulated products.

In addition, the FWA bleed fastness was also determined for simulated two-ply products without any glue. These products were respectively prepared by joining two samples of the above described recycled dry creped tissue paper having the size 2 x 5 cm. However, these samples were not provided with any glue. The FWA bleed fastness was then evaluated according to the same procedure as utilized for the simulated products provided with glue.

**Table 2B FWA bleed fastness at bonding points of simulated two-ply tissue products comprising plies being flexoprinted with reference glue solution (ref. glue sol.) or with a glue mixture comprising the reference glue solution and a cationic polymer.**

| Utilized glue | Greyscale Intensity | FWA bleed fastness (1-5) |
|---|---|---|
| Reference glue solution | 84 | 2 |
| Ref. glue sol. + 1 % Tinofix AP | 27 | 4 |
| Ref. glue sol. + 1 % Alcofix 160 | 27 | 4 |
| Ref. glue sol. + 1% Alcofix 169 | 22 | 5 |
| Ref. glue sol. + 1 % Alcofix 110 | 20 | 5 |
| Ref. glue sol. + 1% Alcofix 111 | 25 | 4 |
| Ref. glue sol. + 1 % Alcofix 4300 | 29 | 4 |
| Ref. glue sol. + 1 % Catiofast PR 8248X | 44 | 3 |
| Ref. glue sol. + 1% Catiofast VFH | 31 | 4 |
| Ref. glue sol. + 1% Catiofast VMP P | 21 | 5 |
| Ref. glue sol. + 3% Tinofix AP | 16 | 5 |
| Reference paper (no glue) | 21 | 5 |

### Conclusions

For the reference sample flexoprinted with the reference glue solution, i.e. flexoprinted with the glue without any other additives than the ink, a relatively low FWA bleed fastness of 2 was obtained compared to the reference paper without any glue. In cases where cationic polymers were added to the reference glue solution a better FWA bleed fastness was obtained and was evaluated to 4 or 5 in almost all cases.

### EXAMPLE 3

### Objective

The objective of Example 3 was to test the FWA bleed fastness of two-ply tissue laminates (i.e. products of a multi-ply web), in which the plies were interconnected by means of an adhesive composition comprising polyvinyl alcohol and a cationic polymer. The determined FWA bleed fastness was to be compared with the FWA bleed fastness of two-ply tissue laminates, in which the plies were interconnected by means of an adhesive composition comprising polyvinyl alcohol but not a cationic polymer. In Example 3, the tissue laminates were prepared by means of embossing lamination.

### Materials and methods

In Example 3, recycled dry creped tissue paper made from a raw material containing high amounts of FWAs was utilized for preparing two-ply tissue laminates. The paper basis weight was 20 gsm. In order to obtain a measure of the content of FWAs in the paper, i.e. to confirm that the paper really contained high amounts of FWAs, brightness measurements were performed on a stack of the paper according to the procedure described in Example 1. Results of the brightness measurements are shown in Table 3A below.

**Table 3A Brightness data of reference paper.**

| | Reference paper |
|---|---|
| ISO Brightness | 77.2 |
| D65 10 UV included | 83.6 |
| D65 10 UV excluded | 71.5 |
| D65 10 FWA (Δ UV incl.-UV excl.) | 12.1 |

A 60 cm wide pilot line supplied by Fabio Perini S.p.A. (Lucca, Italy) was used as embossing lamination device for making embossing laminated two-ply tissue laminates at a line speed of 100 m/min. Figure 1 shows a schematic side view of the utilized embossing lamination device and the embossing lamination principle, i.e. it shows the experimental set-up. A first web 1 of the above mentioned recycled dry creped tissue paper was via a rubber embossing roll 2 brought into a first nip between the rubber embossing roll 2 and a structured embossing roll 3. The structured embossing roll 3 was made of steel and had protuberances 4 forming a leaf pattern. After embossing, the first tissue web 1 was fed to a glue application station, which comprised a doctor blade glue chamber 5, from which glue was applied to a glue transfer roll 6 via an anilox roll 7 of 25 ml/m². The speed of the anilox roll 7 was set to 20 % of the speed of the glue transfer roll 6. The glue transfer roll 6 transferred glue to the areas of the first paper web 1 residing on the tops of the protuberances 4 of the structured embossing roll 3. In a subsequent lamination step, a second web 8 of the above mentioned recycled dry creped tissue paper was laminated to the first web 1 by being passed through a nip between the structured embossing roll 3 and a rubber marrying roll 9.

The polyvinyl alcohol glue Kappasil 260, supplied by Kapp-Chemie GmbH (Miehlen, Germany), was diluted with water in order to prepare a reference glue solution having a concentration of 6%. The reference glue solution was provided with 0.8% of violet ink concentrate Kappaflex P1/10063, supplied by Kapp-Chemie GmbH (Miehlen, Germany), in order to make the glue print visible on the tissue paper, i.e. Kappaflex P1/10063 was utilized as a marker.

In addition, a number of glue mixtures were prepared by adding cationic polymer additives to the reference glue solution at various concentrations. The prepared glue mixtures comprised the following respective additives: Tinofix AP (1.0%, 2.0%), Alcofix 160 (1.0%, 2.0%), Praestafix C160 (1%), Alcofix 169 (1.0%), Alcofix 110 (0.5%, 1.0%, 2.0%), Praestafix C140 (1%, 2%), Alcofix 4300 (1 %), Catiofast VFH (1 %) and Catiofast VMP (1%, 2%). Suppliers were as mentioned in Example 1. The glue mixtures were provided with 0.8% of violet ink concentrate Kappaflex P1/10063.

The reference glue solution and the glue mixtures were respectively utilized as glue for preparing tissue laminates by means of the above described embossing lamination device. For FWA bleed fastness evaluation, 2 x 5 cm samples were punched out from the respective tissue laminates at the leaf bonding points, whereby tissue laminate products were formed. Two tissue laminate products were formed for each glue mixture. In addition, two tissue laminate products were formed for the reference glue solution. The FWA bleed fastness of the respective tissue laminate products was thereafter evaluated in the same way as in Example 1. Thus, the tissue laminate products were brought into contact with water saturated glass fibre papers according to the procedure in Example 1. Thereafter, the fluorescence of the glass fibre papers was evaluated by analyzing grey scale intensity and the grey scale intensity was converted to an FWA bleed fastness grade according to the procedure in Example 1. However, the area utilized for the greyscale intensity measurement in this example was a circle of about 5 mm² representing the lightest part of the glass fibre paper. The results of the FWA bleed fastness test are shown in Table 3B.

Since two tissue laminate products were prepared for each glue mixture/reference glue solution, the FWA bleed fastness test resulted in four glass fibre papers for each glue mixture/reference glue solution. The greyscale intensity values shown in Table 3B for the respective tissue laminate products are a mean value of the greyscale intensity of the four glass fibre papers associated with the respective tissue laminate products.

In addition, the FWA bleed fastness was also determined for products without any glue. These products were respectively prepared by joining two samples of the above described recycled dry creped tissue paper having the size 2 x 5 cm. However, these samples were not provided with any glue. The FWA bleed fastness was then evaluated according to the same procedure as utilized for the tissue laminate products provided with glue.

**Table 3B FWA bleed fastness at the bonding points of two-ply tissue laminates prepared by utilizing the reference glue solution (ref. glue sol.) or a glue mixture comprising the reference glue solution and a cationic polymer.**

| Utilized glue | Greyscale Intensity | FWA bleed fastness (1-5) |
|---|---|---|
| Reference glue solution | 72 | 2 |
| Ref. glue sol. + 1% Alcofix 169 | 34 | 4 |
| Ref. glue sol. + 0.5% Alcofix 110 | 42 | 3 |
| Ref. glue sol. + 1% Alcofix 110 | 24 | 5 |
| Ref. glue sol. + 2% Alcofix 110 | 19 | 5 |
| Ref. glue sol. + 1 % Alcofix 4300 | 28 | 4 |
| Ref. glue sol. + 1 % Tinofix AP | 39 | 3 |
| Ref. glue sol. + 2% Tinofix AP | 41 | 3 |
| Ref. glue sol. + 1% Alcofix 160 | 32 | 4 |
| Ref. glue sol. + 2% Alcofix 160 | 29 | 4 |
| Ref. glue sol. + 1 % Catiofast VFH | 41 | 3 |
| Ref. glue sol. + 1 % Catiofast VM P | 37 | 3 |
| Ref. glue sol. + 2% Catiofast VMP | 39 | 3 |
| Ref. glue sol. + 1% Praestafix C140 | 53 | 2 |
| Ref. glue sol. + 2% Praestafix C140 | 34 | 4 |
| Ref. glue sol. + 1 % Praestafix C160 | 49 | 3 |
| Reference paper (no glue) | 18 | 5 |

### Conclusions

Example 3 shows that it was possible to obtain an improvement of the FWA bleed fastness by addition of a cationic polymer to the polyvinyl alcohol glue not only in laboratory scale.

### EXAMPLE 4

### Objective

The objective of Example 4 was to show that the determined reduced FWA bleed fastness in the previous examples is not due to the fact that cationic polymers quench the emission of fluorescent light from FWA.

### Materials and methods

40 g/m² paper sheets were prepared from recycled pulp made with raw material containing FWAs. The paper sheets were made by a sheet former supplied by Rapidköthen, Papertesting Instruments, Pettenbach, Austria. Paper sheets were prepared where 2.5 kg/ton and 5 kg/ton Tinofix AP, supplied by Ciba Speciality Chemicals (Gothenburg, Sweden), were added to the pulp slurry. A reference sheet was also prepared where no additives were added to the pulp slurry. FWA bleed fastness of these papers to water saturated glass fibre paper and cellulose blotting paper was evaluated as described above according to EN648 procedure B. However, in this example the greyscale intensity was not evaluated, whereby the FWA bleed fastness grades were assigned by subjective evaluation according to EN648 procedure B (1-5). Results of the FWA bleed fastness test are shown in Table 4A. The brightness of the prepared sheets was determined according to the brightness measurement method in Example 1. Results of brightness data of the prepared sheets are shown in Table 4B.

**Table 4A. FWA bleed fastness of lab prepared reference sheet and of paper sheets made with 2.5 and 5 kg/ton Tinofix AP added to the pulp slurry.**

| | FWA bleed fastness (1-5) | | |
|---|---|---|---|
| | Reference sheet | Paper sheet with 2.5 kg/ton Tinofix AP | Paper sheet with 5 kg/ton Tinofix AP |
| Glass fibre paper | 5 | 5 | 5 |
| Cellulose blotting paper | 2 | 3 | 4 |

**Table 4B. Brightness data of reference sheet and of paper sheets made of pulp comprising 2.5 and 5 kg/ton Tinofix AP.**

| | Reference sheet | Paper sheet with 2.5 kg/ton Tinofix AP | Paper sheet with 5 kg/ton Tinofix AP |
|---|---|---|---|
| ISO Brightness | 75.4 | 75.1 | 74.3 |
| D65 10 UV included | 80.3 | 79.7 | 78.7 |
| D65 10 UV excluded | 71.1 | 71.1 | 70.5 |
| D65 10 FWA (Δ UV incl.-UV excl.) | 9.2 | 8.6 | 8.2 |

### Conclusions

The FWA bleed fastness to the cellulose blotting paper indicates that the retention or fixation of the FWA in the paper is improved by adding Tinofix AP to the pulp slurry.

Furthermore, only a minor decrease of one brightness unit was obtained by adding Tinofix AP to the pulp slurry. The observed brightness decrease can be explained by the amberbrown colour of Tinofix AP itself when it is added to the sheet at 5 kg/ton (0.5%). The interaction and better fixation of the FWA to the fibres by the cationic Tinofix AP, may also result in a somewhat lower fluorescence of the present FWA. This could explain the decrease of the delta representing the FWA by one unit. The decrease of only one unit, however, indicates that Tinofix AP is not a very effective quencher of the emission of the fluorescent light from the FWA.

### EXAMPLE 5

### Objective

The objective of Example 5 was to test the FWA bleed fastness of simulated two-ply products (i.e. simulated products of a multi-ply web), in which the plies were interconnected by means of an adhesive composition comprising a cellulose ether and a cationic polymer. The determined FWA bleed fastness was to be compared with the FWA bleed fastness of simulated two-ply products, in which the plies were interconnected by means of an adhesive composition comprising cellulose ether but not a cationic polymer. In Example 5, the adhesive composition was applied to the plies by means of glue gravure printing.

### Materials and methods

In Example 5 recycled dry creped tissue paper made from a raw material containing high amounts of FWAs was utilized for preparing simulated two-ply tissue products. The paper basis weight was 20 gsm. In order to obtain a measure of the content of FWAs in the paper, i.e. to confirm that the paper really contained high amounts of FWAs, brightness measurements were performed on a stack of the paper (reference paper). The brightness measurements were made with the instrument Color Tech, supplied by Technidyne, Inc. The optical properties were measured according to ISO EN 12625-7. Results of the brightness measurements on the reference paper (ISO brightness, D65 UV Included, D65 UV Excluded and D65 10 FWA) are shown in Table 5A. The latter data is the delta between UV included and UV excluded and is a measure of the content of FWA in the reference paper. For comparison, the D65 10 FWA value for tissue paper made of virgin pulp is about 0, whereas the D65 10 FWA value for tissue paper made of recycled office paper is 8-16.

**Table 5A Brightness data of reference paper.**

| | Reference paper |
|---|---|
| ISO Brightness | 88.7 |
| D65 10 UV included | 97.3 |
| D65 10 UV excluded | 81.4 |
| D65 10 FWA (Δ UV incl.-UV excl.) | 16.0 |

Sheets of the above mentioned recycled dry creped tissue paper having the size 15 x 20 cm were prepared for glue gravure printing. As glue for the glue gravure printing, the methyl cellulose glue MC60, supplied by Henkel KgaA (Düsseldorf, Germany), was utilized. It was diluted with water in order to prepare a reference glue solution having a concentration of 3%. The reference glue solution was provided with 0.4% of violet ink concentrate Kappaflex P1/10063, supplied by Kapp-Chemie GmbH (Miehlen, Germany), in order to make the glue print visible on the tissue paper, i.e. Kappaflex P1/10063 was utilized as a marker. As mentioned above, the concentrations of substances provided herein are expressed in weight percentage (% w/w). Unless otherwise stated, these concentrations are measured as dry weights.

In addition, a number of glue mixtures were prepared by adding cationic polymer additives to the reference glue solution at various concentrations. The prepared glue mixtures comprised the following respective additives: Tinofix AP (0.5%, 1.0%, 2.0%), Alcofix 160 (1.0%), Fennofix 50 (1%), Alcofix 169 (0.5%, 1.0%), Alcofix 110 (1.0%), Fennofix 41 (1.0%), Fennofix 240 (1 %), Catiofast VMP (1 %), Lupasol PS (1%) and Lupasol SK (1 %).

Aliphatic polyamines Tinofix AP and Alcofix 160 (made by a polycondensation reaction of dimethyl amine, ethylene diamine, and epichlorohydrin) were supplied by Ciba Speciality Chemicals (Gothenburg, Sweden); aliphatic polyamine Fennofix 50 was supplied by Kemira GmbH (Leverkusen, Germany); poly-DADMACs (poly-diallyl-dimethyl-ammonium chloride) Alcofix 169 and Alcofix 110 were supplied by CIBA Speciality Chemicals (Gothenburg, Sweden); cationic polyacrylic amide Fennofix 240 was supplied by Kemira, (Leverkusen, Germany); poly-DADMAC Fennofix 41 was supplied by Kemira (Leverhausen, Germany); weak cationic charged polyvinyl amine Catiofast VMP (made from poly(N-vinyl formamide)) was supplied by BASF via BTC Nordic (Gothenburg, Sweden); cationic polyethylene imines Lupasol PS and Lupasol SK were supplied by BASF GmbH (Ludwigshafen, Germany). The glue mixtures were provided with 0.5% of violet ink concentrate Kappaflex P1/10063, supplied by Kapp-Chemie GmbH (Miehlen, Germany), in order to make the glue print visible on the tissue paper, i.e. Kappaflex P1/10063 was utilized as a marker.

Glue gravure printing was performed by means of a "Labratester automatic", supplied by Norbert Schläfli Machinen (Zofingen, Switzerland). A standard gravure printing plate having areas corresponding to gravure volumes of 0.7 ml/m², 3.7 ml/m², 6.8 ml/m², 10.3 ml/m² and 13 ml/m², respectively, was utilized. The size of each area was 2.5 x 12 cm.

About 1 ml of glue, i.e. reference glue solution or a glue mixture, was applied onto the gravure printing plate for printing one of the prepared sheets of the dry creped tissue paper. Each sheet was printed once. One sheet was printed for each glue mixture and one sheet was printed with the reference glue solution. After the gravure printing, each sheet was folded once such that a folded sheet was formed with the glue print on the inside. Each sheet was folded such that the area being printed with the gravure volume 10.3 ml/m² was essentially joined with the area being printed with the gravure volume 13 ml/m². Two samples of 2 x 5 cm were the punched out from each folded sheet at the area of the combined 10.3 ml/m² and 13.0 ml/m² glue print. Thereby, two simulated two-ply tissue products were formed from each sheet. Each simulated two-ply tissue product comprised one paper sample of 2 x 5 cm being printed with the gravure volume 10.3 ml/m² and one paper sample of 2 x 5 cm being printed with the gravure volume 13 ml/m². Accordingly, two simulated products were prepared for each glue mixture and two simulated products were prepared for the reference glue solution.

FWA bleed fastness of the simulated two-ply tissue products was thereafter evaluated, partly in accordance with EN648 procedure B. The simulated products were brought into contact with glass fibre papers, which had been saturated with water. The glass fibre papers had the size of 60 x 90 mm and a basis weight of 70 gsm. One glass fibre paper was positioned on each side of a simulated product, and the glass fibre papers and the simulated product were placed under a load of 1 kg for 10 minutes. If any bleeding occurred, FWAs were then transferred to the glass fibre papers. The staining of the glass fibre papers, i.e. the amount of FWAs that had been transferred to the glass fibre papers, was then evaluated by analyzing the fluorescence of the glass fibre papers under UV-light.

According to EN648 procedure B, the fluorescence of the glass fibre papers is to be evaluated by comparison with a series of fluorescent whitened comparison papers. A comparison scale of 1-5 is to be utilized according to EN648 procedure B for reporting the results. The grade 1 means that a high bleeding has occurred, whereas the grade 5 means that no bleeding at all, or essentially no bleeding, has occurred. It should be noted that faint fluorescence (small bright spots) should not be determined as bleeding of FWAs according to EN648 procedure B. This is because faint fluorescence may be caused by other components in the paper, at the edges of the sample or from dust in the air. Therefore, fluorescence less than corresponding with grade 4 is not an indication of bleeding of FWAs and shall be evaluated as grade 5.

However, since the evaluation of the fluorescence according to EN648 procedure B is a highly subjective procedure, i.e. the assignment of the respective grades (1-5) to the respective simulated two-ply products depends on the person performing the evaluation, the fluorescence of the glass fibre papers was evaluated by analyzing greyscale intensity by image analysis. The glass fibre papers were then placed 45 cm below UV-lamps providing UV-A-light (365 nm) in a closed UV-light cabinet (i.e. the glass fibre papers were screened from other light). Images of the glass fibre papers were taken during the UV-light exposure with a Canon Powershot A620 digital camera. The camera was placed on top of the UV-light cabinet right above the glass fibre papers and images were taken through a 50 mm diameter opening at a distance of 50 cm from the glass fibre papers. In order to obtain usable images in the dark surroundings, the largest diaphragm opening of 2.8, a long shutter time of ¼ seconds and an ISO sensitivity of 100 were utilized. Images were then converted to greyscale with Image Pro-Plus 3.0 image analysis software, and greyscale intensity of the lightest part, corresponding to an area of 10 x 30 mm, of the glass fibre papers was recorded. By means of this procedure, a more objective and more sensitive evaluation of the intensity of the fluorescence was obtained. Greyscale values between 1 and 255 were utilized. The greyscale value "1" means black and the greyscale value "255" means white. Thus, a high greyscale value means that high bleeding has occurred, whereas a low greyscale value means that low or no bleeding at all has occurred. The results of the greyscale intensity evaluation are shown in Table 5B.

The procedure utilized for the FWA bleed fastness test resulted in two glass fibre papers to be evaluated for each simulated product. In addition, since two simulated products were prepared for each glue mixture/reference glue solution, the FWA bleed fastness test resulted in four glass fibre papers for each glue mixture/reference glue solution. The greyscale intensity values shown in Table 5B for the respective simulated products are a mean value of the greyscale intensity of the four glass fibre papers associated with the respective simulated products.

In order to report the results of the FWA bleed fastness test with the grades 1-5 of the comparison scale according to EN648 procedure B described above, but with elimination of the subjective assignment of the respective grades to the respective simulated two-ply products, the greyscale intensity values were converted to the comparison grades 1-5 utilized in EN648 procedure B by utilizing the conversions according to Table 5C. The converted FWA bleed fastness grades (1-5) are reported in Table 5B. For example, in case a simulated product was determined to have a greyscale intensity of < 25, the product was assigned grade "5" according to the comparison scale. In case a simulated product was determined to have a greyscale intensity of 25-34, the product was assigned grade "4" according to the comparison scale, etc.

In addition, the FWA bleed fastness was also determined for two simulated two-ply products without any glue. These products were respectively prepared by joining two samples of the above described recycled dry creped tissue paper having the size 2 x 5 cm. However, these samples were not provided with any glue. The FWA bleed fastness was then evaluated according to the above procedure and the results are shown in Table 5B.

**Table 5B FWA bleed fastness at bonding points of simulated two-ply tissue products comprising plies being gravure printed with reference glue solution (ref. glue sol.) or with a glue mixture comprising the reference glue solution and a cationic polymer.**

| Utilized glue | Greyscale Intensity | FWA bleed fastness (1-5) |
|---|---|---|
| Reference glue solution | 27 | 4 |
| Ref. glue sol. + 0.5% Tinofix AP | 22 | 5 |
| Ref. glue sol. + 1 % Tinofix AP | 18 | 5 |
| Ref. glue sol. + 2% Tinofix AP | 15 | 5 |
| Ref. glue sol. + 1% Alcofix 160 | 14 | 5 |
| Ref. glue sol. + 1 % Fennofix 50 | 19 | 5 |
| Ref. glue sol. + 0.5% Alcofix 169 | 22 | 5 |
| Ref. glue sol. + 1% Alcofix 169 | 18 | 5 |
| Ref. glue sol. + 1 % Alcofix 110 | 23 | 5 |
| Ref. glue sol. + 1 % Fennofix 41 | 20 | 5 |
| Ref. glue sol. + 1 % Fennofix 240 | 24 | 5 |
| Ref. glue sol. + 1 % Catiofast VM P | 20 | 5 |
| Ref. glue sol. + 1 % Lupasol PS | 16 | 5 |
| Ref. glue sol. + 1 % Lupasol SK | 21 | 5 |
| Reference paper (no glue) | 16 | 5 |

**Table 5C Conversion of greyscale intensity to FWA bleed fastness grades**

| Greyscale intensity | FWA bleed fastness (1-5) |
|---|---|
| < 25 | 5 |
| 25 - 34 | 4 |
| 35 - 49 | 3 |
| 50 - 89 | 2 |
| > 89 | 1 |

### Conclusions

The results of the FWA bleed fastness tests shown in Tables 5B indicate that the addition of a cationic polymer to a methyl cellulose glue will result in a significant improvement of the FWA bleed fastness. All tested cationic polymers resulted in an improvement of the FWA bleed fastness from the grade "4" (reference glue solution) to the grade "5".

### Discussion of mechanism

Many of the cationic polymers above can be used to bind anionic direct dies to cellulose fibres to improve colour bleed fastness. As FWA molecules have a structure similar to anionic direct dies it is believed that a better fixation of the FWA to the fibres is obtained. This is also supported by the bleed fastness test to cellulose blotting paper in Example 4 when the anionic direct dye fixation agent Tinofix AP was added at 2.5 and 5 kg/ton to the paper.

The cationically charged polymer molecules have a much higher retention and fixation to the cellulose fibres as compared with the non-charged polyvinyl alcohol polymer molecules and the methyl cellulose molecules, respectively. When the glue is drying in the paper a network of the two respective polymers (i.e. cationic polymer + polyvinyl alcohol or cationic polymer + methyl cellulose) will form at the bonding points. Also a network of the two polymers may form already in and as the glue solution is mixed. As drying of the glue occurs relatively fast after glue is applied to the absorbent tissue paper the formation of an interpenetrating network between the two respective polymers is favoured. At the dissolution of the interpenetrated network the cationically charged polymer bonded by strong interactions to the surface of the cellulose fibres will hold and delay the dissolution and diffusion of the polyvinyl alcohol molecules and methyl cellulose molecules, respectively. The interpenetrating network will thus fix the polyvinyl alcohol molecules and the methyl cellulose molecules, respectively, a longer time in the paper. This could explain the higher bleed fastness when cationic polymers are used together with polyvinyl alcohol or methyl cellulose, respectively.

Many of the cationic polymers used in the previous examples have a poorer solubility in water as compared with polyvinyl alcohol and methyl cellulose. As an interpenetrating network of the cationic polymer and polyvinyl alcohol or methyl cellulose is formed the dissolution rate of the mixture will be slower as compared with polyvinyl alcohol or methyl cellulose alone. This will delay the dissolution and diffusion of the polyvinyl alcohol and methyl cellulose in the paper. This could also explain the improved bleed fastness observed in the 10 minutes bleeding test with glass fibre paper.

The explanations above are supported by the visual observation of fluorescent light in an UV light cabinet of areas printed with pure polyvinyl alcohol glue. These areas are diffuse and indicate a diffusion and transport of the FWA carried by polyvinyl alcohol in the X-Y direction. When an effective cationic polymer has been used this print is much sharper and no diffusion of the FWA (or carrying of the FWA by polyvinyl alcohol) in the X-Y direction could be observed.

By spraying iodine solution onto the glass fibre paper used in the bleed fastness test, polyvinyl alcohol diffused to the glass fibre paper became coloured and was detected. This proves that the polyvinyl alcohol molecules are dissolved and diffused to the glass fibre paper. When glass fibre papers from bleed fastness tests with reference polyvinyl alcohol were sprayed with iodine solutions, a diffuse pattern and a relatively large area become coloured. This indicates that polyvinyl alcohol was dissolved and spread over a relatively large area in X-Y direction where also the emission of the fluorescent light occurred. After spraying the iodine solution onto a glass fibre paper from a bleed fastness test when an effective cationic polymer was used in the polyvinyl alcohol glue, a smaller amount and area of the glass fibre paper became coloured.

These two observations support the mechanism that an interpenetrating network of the two polymers is formed which delays and reduce the diffusion and dissolution of the polyvinyl alcohol molecules during the 10 minutes bleed fastness test.

Thus, while there have been described and pointed out fundamental novel features of the invention as applied to preferred embodiments thereof, it will be understood that various omissions and substitutions and changes in the form and details of the products and method steps described may be made by those skilled in the art. For example, it is expressly intended that all combinations of those elements and/or method steps which perform substantially the same function in substantially the same way to achieve the same results are within the scope of the invention. Moreover, it should be recognized that structures and/or elements and/or method steps described in connection with any disclosed form or embodiment of the invention may be incorporated in any other disclosed or described or suggested form or embodiment as a general matter of design choice. It is the intention, therefore, to be limited only as indicated by the scope of the claims appended hereto.

## Claims

1. A multi-ply web of flexible material, such as paper and nonwoven material, said flexible material comprising a fluorescent whitening agent, whereby the multi-ply web comprises at least a first ply and a second ply which are interconnected in one or more adhesive interconnection zones by means of an adhesive composition comprising a cellulose ether,
**characterized in, that**
said adhesive composition further comprises a cationic polymer selected from the group consisting of aliphatic polyamines, polyethylene imines, modified polyethylene imines, polycondensation products of cationic cyanamide derivatives, polycondensation products of dicyandiamide, cationic polyvinyl amines, polyvinyl formamide, polyvinyl formamide derivatives, polyallyl amines, copolymers between a cationic acrylate and acrylamide, homopolymers of diallyl-dimethyl-ammonium chloride, copolymers between diallyl-dimethyl-ammonium chloride and acrylamide, and cationic modifications of non-ionic polyacrylamide.

2. The multi-ply web according to claim 1,
**characterized in, that**
said cellulose ether is methyl cellulose.

3. The multi-ply web according to claim 1 or 2,
**characterized in, that**
said adhesive composition comprises 0.2-3% w/w cationic polymer, preferably 0.5-1.5% w/w cationic polymer.

4. The multi-ply web according to claim 3,
**characterized in, that**
said adhesive composition comprises 1-10% w/w of a cellulose ether, preferably 2-5% w/w of a cellulose ether.

5. A multi-ply web of flexible material, such as paper and nonwoven material, said flexible material comprising a fluorescent whitening agent, whereby the multi-ply web comprises at least a first ply and a second ply which are interconnected in one or more adhesive interconnection zones by means of an adhesive composition comprising polyvinyl alcohol,
**characterized in, that**
said adhesive composition further comprises a cationic polymer selected from the group consisting of aliphatic polyamines, polyethylene imines, modified polyethylene imines, polycondensation products of cationic cyanamide derivatives, polycondensation products of dicyandiamide, cationic polyvinyl amines, polyvinyl formamide, polyvinyl formamide derivatives, polyallyl amines, copolymers between a cationic acrylate and acrylamide, homopolymers of diallyl-dimethyl-ammonium chloride, copolymers between diallyl-dimethyl-ammonium chloride and acrylamide, and cationic modifications of non-ionic polyacrylamide.

6. The multi-ply web according to claim 5,
**characterized in, that**
said adhesive composition comprises 0.2-4% w/w cationic polymer, preferably 1-2% w/w cationic polymer.

7. The multi-ply web according to claim 6,
**characterized in, that**
said adhesive composition comprises 2-12% w/w polyvinyl alcohol, preferably 4-6% w/w polyvinyl alcohol.

8. The multi-ply web according to any of the preceding claims, **characterized in, that**
said cationic polymer is selected from the group consisting of polydiallyl-dimethyl- ammonium chloride, aliphatic polyamines, cationic polyvinyl amines, polyvinyl formamide, polyvinyl formamide derivatives, cationic polyacrylamides and polyethylene imines.

9. The multi-ply web according to any of the preceding claims, **characterized in, that**
the flexible material comprises recycled flexible material.

10. A product, such as a roll, folded towel, wipe, handkerchief, napkin and the like, of web-shaped material,
**characterized in, that**
said web-shaped material is a multi-ply web according to any of claims 1-9.

11. The product of web-shaped material according to claim 10, **characterized in, that**
said web-shaped material is a wet strong paper.

12. The product of web-shaped material according to claim 10, **characterized in, that**
said web-shaped material is tissue paper.

13. A method for improving the bleed fastness of a fluorescent whitening agent in one or more adhesive interconnection zones of a multi-ply web of flexible material, such as paper and nonwoven material, whereby said multi-ply web comprises at least a first ply and a second ply which are interconnected in said one or more adhesive interconnection zones by means of an adhesive composition comprising a cellulose ether, **characterized in, that**
the method comprises a step of incorporating a cationic polymer selected from the group consisting of aliphatic polyamines, polyethylene imines, modified polyethylene imines, polycondensation products of cationic cyanamide derivatives, polycondensation products of dicyandiamide, cationic polyvinyl amines, polyvinyl formamide, polyvinyl formamide derivatives, polyallyl amines, copolymers between a cationic acrylate and acrylamide, homopolymers of diallyl-dimethyl-ammonium chloride, copolymers between diallyl-dimethyl-ammonium chloride and acrylamide, and cationic modifications of non-ionic polyacrylamide in said adhesive composition comprising a cellulose ether.

14. The method according to claim 13,
**characterized in, that**
the said cellulose ether is methyl cellulose.

15. The method according to claim 13 or 14,
**characterized in, that**
the step of incorporating a cationic polymer in said adhesive composition comprises providing said adhesive composition with 0.2-3% w/w cationic polymer, preferably 0.5-1.5% w/w cationic polymer

16. The method according to claim 15,
**characterized in, that**
said adhesive composition comprises 1-10% w/w of a cellulose ether, preferably 2-5% w/w of a cellulose ether.

17. A method for improving the bleed fastness of a fluorescent whitening
agent in one or more adhesive interconnection zones of a multi-ply web of flexible material, such as paper and nonwoven material, whereby said multi-ply web comprises at least a first ply and a second ply which are interconnected in said one or more adhesive interconnection zones by means of an adhesive composition comprising polyvinyl alcohol, **characterized in, that**
the method comprises a step of incorporating a cationic polymer selected from the group consisting of aliphatic polyamines, polyethylene imines, modified polyethylene imines, polycondensation products of cationic cyanamide derivatives, polycondensation products of dicyandiamide, cationic polyvinyl amines, polyvinyl formamide, polyvinyl formamide derivatives, polyallyl amines, copolymers between a cationic acrylate and acrylamide, homopolymers of diallyl-dimethyl-ammonium chloride, copolymers between diallyl-dimethyl-ammonium chloride and acrylamide, and cationic modifications of non-ionic polyacrylamide in said adhesive composition comprising polyvinyl alcohol.

18. The method according to claim 17,
**characterized in, that**
the step of incorporating a cationic polymers in said adhesive composition comprises providing said adhesive composition with 0.2-4% w/w cationic polymer, preferably 1-2% w/w cationic polymer.

19. The method according to claim 18,
**characterized in, that**
said adhesive composition comprises 2-12% w/w polyvinyl alcohol, preferably 4-6% w/w polyvinyl alcohol.

20. The method according to any of claims 13-19,
**characterized in, that**
the step of incorporating a cationic polymer in said adhesive composition is performed before interconnecting plies of the multi-ply web by the adhesive composition.

21. The method according to any one of claims 13-20,
**characterized in, that**
said cationic polymer is selected from the group consisting of poly-diallyl-dimethyl-ammonium chloride, aliphatic polyamines, cationic polyvinyl amines, polyvinyl formamide, polyvinyl formamide derivatives, cationic polyacrylamides and polyethylene imines.

22. The method according to any of claims 13-21,
**characterized in, that**
the flexible material comprises recycled flexible material.

## Patentansprüche

1. Mehrlagige Bahn aus flexiblem Material, wie Papier und Vliesstoff, wobei das flexible Material ein fluoreszierendes Aufhellungsmittel umfasst, wobei die mehrlagige Bahn wenigstens eine erste Lage und eine zweite Lage, die über eine oder mehrere Klebeverbindungsbereiche mittels einer Klebstoffzusammensetzung, die einen Celluloseether umfasst, miteinander verbunden sind, umfasst,
**dadurch gekennzeichnet, dass**
die Klebstoffzusammensetzung ferner ein kationisches Polymer umfasst, ausgewählt aus der Gruppe bestehend aus aliphatischen Polyaminen, Polyethyleniminen, modifizierten Polyethyleniminen, Polykondensationsprodukten von kationischen Cyanamidderivaten, Polykondensationsprodukten von Dicyandiamid, kationischen Polyvinylaminen, Polyvinylformamid, Polyvinylformamidderivaten, Polyallylaminen, Copolymeren zwischen einem kationischen Acrylat und Acrylamid, Homopolymeren von Diallyldimethylammoniumchlorid, Copolymeren zwischen Diallyldimethylammoniumchlorid und Acrylamid und kationischen Modifikationen von nicht-ionischem Polyacrylamid.

2. Mehrlagige Bahn gemäß Anspruch 1, **dadurch gekennzeichnet, dass** der Celluloseether Methylcellulose ist.

3. Mehrlagige Bahn gemäß Anspruch 1 oder 2, **dadurch gekennzeichnet, dass** die Klebstoffzusammensetzung 0,2 bis 3 % W/W eines kationischen Polymers, vorzugsweise 0,5 bis 1,5 % W/W eines kationischen Polymers, umfasst.

4. Mehrlagige Bahn gemäß Anspruch 3, **dadurch gekennzeichnet, dass** die Klebstoffzusammensetzung 1 bis 10 % W/W eines Celluloseethers, vorzugsweise 2 bis 5 % W/W eines Celluloseethers, umfasst.

5. Mehrlagige Bahn aus flexiblem Material, wie Papier und Vliesstoff, wobei das flexible Material ein fluoreszierendes Aufhellungsmittel umfasst, wobei die mehrlagige Bahn wenigstens eine erste Lage und eine zweite Lage, die über eine oder mehrere Klebeverbindungsbereiche mittels einer Klebstoffzusammensetzung, die einen Polyvinylalkohol umfasst, miteinander verbunden sind, umfasst,
**dadurch gekennzeichnet, dass**
die Klebstoffzusammensetzung ferner ein kationisches Polymer umfasst, ausgewählt aus der Gruppe bestehend aus aliphatischen Polyaminen, Polyethyleniminen, modifizierten Polyethyleniminen, Polykondensationsprodukten von kationischen Cyanamidderivaten, Polykondensationsprodukten von Dicyandiamid, kationischen Polyvinylaminen, Polyvinylformamid, Polyvinylformamidderivaten, Polyallylaminen, Copolymeren zwischen einem kationischen Acrylat und Acrylamid, Homopolymeren von Diallyldimethylammoniumchlorid, Copolymeren zwischen Diallyldimethylammoniumchlorid und Acrylamid und kationischen Modifikationen von nicht-ionischem Polyacrylamid.

6. Mehrlagige Bahn gemäß Anspruch 5, **dadurch gekennzeichnet, dass** die Klebstoffzusammensetzung 0,2 bis 4 % W/W eines kationischen Polymers, vorzugsweise 1 bis 2 % W/W eines kationischen Polymers, umfasst.

7. Mehrlagige Bahn gemäß Anspruch 6, **dadurch gekennzeichnet, dass** die Klebstoffzusammensetzung 2 bis 12 % W/W Polyvinylalkohol, vorzugsweise 4 bis 6 % W/W Polyvinylalkohol, umfasst.

8. Mehrlagige Bahn gemäß einem der vorangehenden Ansprüche, **dadurch gekennzeichnet, dass** das kationische Polymer ausgewählt ist aus der Gruppe, bestehend aus Polydiallyldimethylammoniumchlorid, aliphatischen Polyaminen, kationischen Polyvinylaminen, Polyvinylformamid, Polyvinylformamidderivaten, kationischen Polyacrylamiden und Polyethyleniminen.

9. Mehrlagige Bahn gemäß einem der vorangehenden Ansprüche, **dadurch gekennzeichnet, dass** das flexible Material ein recyceltes flexibles Material umfasst.

10. Produkt, wie eine Rolle, ein gefaltetes Tuch, ein Wischtuch, ein Taschentuch, eine Serviette und dergleichen, aus einem bahnförmigen Material, **dadurch gekennzeichnet, dass** das bahnförmige Material eine mehrlagige Bahn gemäß einem der Ansprüche 1 bis 9 ist.

11. Produkt aus einem bahnförmigen Material gemäß Anspruch 10, **dadurch gekennzeichnet, dass** das bahnförmige Material ein nasses starkes Papier ist.

12. Produkt aus einem bahnförmigen Material gemäß Anspruch 10, **dadurch gekennzeichnet, dass** das bahnförmige Material Tissue-Papier ist.

13. Verfahren zur Verbesserung der Ausblutechtheit eines fluoreszierenden Aufhellungsmittels in einem oder mehreren Klebeverbindungsbereichen einer mehrlagigen Bahn aus flexiblem Material, wie Papier und Vliesstoff, wobei die mehrlagige Bahn wenigstens eine erste Lage und eine zweite Lage, die über eine oder mehrere Klebeverbindungsbereiche mittels einer Klebstoffzusammensetzung, die einen Celluloseether umfasst, miteinander verbunden sind, umfasst, **dadurch gekennzeichnet, dass**
das Verfahren einen Schritt umfasst, in welchem ein kationisches Polymer, ausgewählt aus der Gruppe bestehend aus aliphatischen Polyaminen, Polyethyleniminen, modifizierten Polyethyleniminen, Polykondensationsprodukten von kationischen Cyanamidderivaten, Polykondensationsprodukten von Dicyandiamid, kationischen Polyvinylaminen, Polyvinylformamid, Polyvinylformamidderivaten, Polyallylaminen, Copolymeren zwischen einem kationischen Acrylat und Acrylamid, Homopolymeren von Diallyldimethylammoniumchlorid, Copolymeren zwischen Diallyldimethylammoniumchlorid und Acrylamid und kationischen Modifikationen von nicht-ionischem Polyacrylamid, in die Klebestoffzusammensetzung, die einen Celluloseether umfasst, aufgenommen wird.

14. Verfahren gemäß Anspruch 13, **dadurch gekennzeichnet, dass** der Celluloseether Methylzellulose ist.

15. Verfahren gemäß Anspruch 13 oder 14, **dadurch gekennzeichnet, dass** der Schritt, in dem ein kationisches Polymer in die Klebstoffzusammensetzung aufgenommen wird, die Bereitstellung der Klebstoffzusammensetzung mit 0,2 bis 3 % W/W des kationischen Polymers, vorzugsweise mit 0,5 bis 1,5 % W/W des kationischen Polymers, umfasst.

16. Verfahren gemäß Anspruch 15, **dadurch gekennzeichnet, dass** die Klebstoffzusammensetzung 1 bis 10 % W/W eines Celluloseethers, vorzugsweise 2 bis 5 % W/W eines Celluloseethers umfasst.

17. Verfahren zur Verbesserung der Ausblutechtheit eines fluoreszierenden Aufhellungsmittels in einem oder mehreren Klebeverbindungsbereichen einer mehrlagigen Bahn aus flexiblem Material, wie Papier und Vliesstoff, wobei die mehrlagige Bahn wenigstens eine erste Lage und eine zweite Lage, die über eine oder mehrere Klebeverbindungsbereiche mittels einer Klebstoffzusammensetzung, die einen Polyvinylalkohol umfasst, miteinander verbunden sind, umfasst, **dadurch gekennzeichnet, dass**
das Verfahren einen Schritt umfasst, in welchem ein kationisches Polymer, ausgewählt aus der Gruppe bestehend aus aliphatischen Polyaminen, Polyethyleniminen, modifizierten Polyethyleniminen, Polykondensationsprodukten von kationischen Cyanamidderivaten, Polykondensationsprodukten von Dicyandiamid, kationischen Polyvinylaminen, Polyvinylformamid, Polyvinylformamidderivaten, Polyallylaminen, Copolymeren zwischen einem kationischen Acrylat und Acrylamid, Homopolymeren von Diallyldimethylammoniumchlorid, Copolymeren zwischen Diallyldimethylammoniumchlorid und Acrylamid und kationischen Modifikationen von nicht-ionischem Polyacrylamid, in die Klebestoffzusammensetzung, die einen Polyvinylalkohol umfasst, aufgenommen wird.

18. Verfahren gemäß Anspruch 17, **dadurch gekennzeichnet, dass** der Schritt, in dem ein kationisches Polymer in die Klebstoffzusammensetzung aufgenommen wird, die Bereitstellung der Klebstoffzusammensetzung mit 0,2 bis 4 % W/W des kationischen Polymers, vorzugsweise mit 1 bis 2 % W/W des kationischen Polymers, umfasst.

19. Verfahren gemäß Anspruch 18, **dadurch gekennzeichnet, dass** die Klebstoffzusammensetzung 2 bis 12 % W/W Polyvinylalkohol, vorzugsweise 4 bis 6 % W/W Polyvinylalkohol umfasst.

20. Verfahren gemäß einem der Ansprüche 13 bis 19, **dadurch gekennzeichnet, dass** der Schritt, in dem ein kationisches Polymer in die Klebstoffzusammensetzung aufgenommen wird, vor dem Verbinden der Lagen der mehrlagigen Bahn durch die Klebstoffzusammensetzung durchgeführt wird.

21. Verfahren gemäß einem der Ansprüche 13 bis 20, **dadurch gekennzeichnet, dass** das kationische Polymer ausgewählt ist aus der Gruppe, bestehend aus Polydiallyldimethylammoniumchlorid, aliphatischen Polyaminen, kationischen Polyvinylaminen, Polyvinylformamid, Polyvinylformamidderivaten, kationischen Polyacrylamiden und Polyethyleniminen.

22. Verfahren gemäß einem der Ansprüche 13 bis 21, **dadurch gekennzeichnet, dass** das flexible Material ein recyceltes flexibles Material umfasst.

## Revendications

1. Bande multi-pli de matière souple, telle que du papier et de la matière non tissée, ladite matière souple comportant un agent blanchissant fluorescent, où la bande multi-pli comporte au moins un premier pli et un deuxième pli qui sont interconnectés dans une ou plusieurs zones d'interconnexion adhésives, au moyen d'un composé adhésif comprenant un éther de cellulose,
**caractérisée en ce que**
ledit composé adhésif comprend en outre un polymère cationique sélectionné dans le groupe comprenant des polyamines aliphatiques, des polyéthylènes imines, des polyéthylènes imines modifiées, des polycondensats de dérivés de cyanamide cationique, des polycondensats de dicyandiamide, des polyvinylamines cationiques, la polyvinyl-formamide, des dérivés de polyvinyl-formamide, des polyallylamines, des copolymères entre un acrylate cationique et l'acrylamide, des homopolymères de chlorure de diallyldiméthylammonium, des copolymères entre le chlorure de diallyldiméthylammonium et l'acrylamide, et des modifications cationiques de polyacrylamide non ionique.

2. Bande multi-pli selon la revendication 1, **caractérisée en ce que** ledit éther de cellulose est de la méthylcellulose.

3. Bande multi-pli selon la revendication 1 ou 2, **caractérisée en ce que** ledit composé adhésif comprend 0,2-3 % p/p de polymère cationique, de préférence 0,5-1,5 % p/p de polymère cationique.

4. Bande multi-pli selon la revendication 3, **caractérisée en ce que** ledit composé adhésif comprend 1-10 % p/p d'un éther de cellulose, de préférence 2-5 % p/p d'un éther de cellulose.

5. Bande multi-pli de matière souple, telle que du papier et une matière non tissée, ladite matière souple comportant un agent blanchissant fluorescent, où la bande multi-pli comporte au moins un premier pli et un deuxième pli qui sont interconnectés dans une ou plusieurs zones d'interconnexion adhésives, au moyen d'un composé adhésif comprenant de l'alcool polyvinylique,
**caractérisée en ce que**
ledit composé adhésif comprend en outre un polymère cationique sélectionné dans le groupe comprenant des polyamines aliphatiques, des polyéthylènes imines, des polyéthylènes imines modifiées, des polycondensats de dérivés de cyanamide cationique, des polycondensats de dicyandiamide, des polyvinylamines cationiques, la polyvinyl-formamide, des dérivés de polyvinyl-formamide, des polyallylamines, des copolymères entre un acrylate cationique et l'acrylamide, des homopolymères de chlorure de diallyldiméthylammonium, des copolymères entre le chlorure de diallyldiméthylammonium et l'acrylamide, et des modifications cationiques de polyacrylamide non ionique.

6. Bande multi-pli selon la revendication 5, **caractérisée en ce que** ledit composé adhésif comprend 0,2-4 % p/p de polymère cationique, de préférence 1-2 % p/p de polymère cationique.

7. Bande multi-pli selon la revendication 6, **caractérisée en ce que** ledit composé adhésif comprend 2-12 % p/p d'alcool polyvinylique, de préférence 4-6 % p/p d'alcool polyvinylique.

8. Bande multi-pli selon l'une quelconque des revendications précédentes, **caractérisée en ce que** ledit polymère cationique est sélectionné dans le groupe comprenant du polychlorure de diallyldiméthylammonium, des polyamines aliphatiques, des polyvinylamines cationiques, la polyvinyl-formamide, des dérivés de polyvinyl-formamide, des polyacrylamides cationiques et des polyéthylènes imines.

9. Bande multi-pli selon l'une quelconque des revendications précédentes, **caractérisée en ce que** la matière souple comprend de la matière souple recyclée.

10. Produit, tel qu'un rouleau, un essuie-mains plié, un chiffon, un mouchoir, une serviette et analogue de la matière en forme de bande, **caractérisé en ce que** ladite matière en forme de bande est une bande multi-pli selon l'une quelconque des revendications 1 à 9.

11. Produit de matière multi-pli selon la revendication 10, **caractérisé en ce que** ladite matière en forme de bande est un papier résistant humide.

12. Produit de matière multi-pli selon la revendication 10, **caractérisé en ce que** ladite matière en forme de bande est du papier-mouchoir.

13. Procédé d'amélioration de la résistance au dégorgement d'un agent blanchissant fluorescent dans une ou plusieurs zones d'interconnexion adhésives d'une bande multi-pli de matière souple, telle que du papier et de la matière non tissée, où ladite bande multi-pli comporte au moins un premier pli et un deuxième pli qui sont interconnectés dans ladite/lesdites une ou plusieurs zones d'interconnexion adhésives, au moyen d'un composé adhésif comprenant un éther de cellulose,
**caractérisé en ce que**
le procédé comprend une étape d'incorporation d'un polymère cationique sélectionné dans le groupe comprenant des polyamines aliphatiques, des polyéthylènes imines, des polyéthylènes imines modifiées, des polycondensats de dérivés de cyanamide cationique, des polycondensats de dicyandiamide, des polyvinylamines cationiques, la polyvinyl-formamide, des dérivés de polyvinyl-formamide, des polyallylamines, des copolymères entre un acrylate cationique et l'acrylamide, des homopolymères de chlorure de diallyldiméthylammonium, des copolymères entre le chlorure de diallyldiméthylammonium et l'acrylamide, et des modifications cationiques de polyacrylamide non ionique dans ledit composé adhésif comportant un éther de cellulose.

14. Procédé selon la revendication 13, **caractérisé en ce que** ledit éther de cellulose est de la méthylcellulose.

15. Procédé selon la revendication 13 ou 14, **caractérisé en ce que** l'étape d'incorporation d'un polymère cationique dans ledit composé adhésif comprend la dotation dudit composé adhésif avec 0,2-3 % p/p de polymère cationique, de préférence 0,5-1,5 % p/p de polymère cationique.

16. Procédé selon la revendication 15, **caractérisé en ce que** ledit composé adhésif comprend 1-10 % p/p d'un éther de cellulose, de préférence 2-5 % p/p d'un éther de cellulose.

17. Procédé d'amélioration de la résistance au dégorgement d'un agent blanchissant fluorescent dans une ou plusieurs zones d'interconnexion adhésives d'une bande multi-pli de matière souple, telle que du papier et de la matière non tissée, où ladite bande multi-pli comporte au moins un premier pli et un deuxième pli qui sont interconnectés dans ladite/lesdites une ou plusieurs zones d'interconnexion adhésives, au moyen d'un composé adhésif comprenant un alcool polyvinylique,
**caractérisé en ce que**
le procédé comprend une étape d'incorporation d'un polymère cationique sélectionné dans le groupe comprenant des polyamines aliphatiques, des polyéthylènes imines, des polyéthylènes imines modifiées, des polycondensats de dérivés de cyanamide cationique, des polycondensats de dicyandiamide, des polyvinylamines cationiques, la polyvinyl-formamide, des dérivés de polyvinyl-formamide, des polyallylamines, des copolymères entre un acrylate cationique et l'acrylamide, des homopolymères de chlorure de diallyldiméthylammonium, des copolymères entre le chlorure de diallyldiméthylammonium et l'acrylamide, et des modifications cationiques de polyacrylamide non ionique dans ledit composé adhésif comportant un alcool polyvinylique.

18. Procédé selon la revendication 17, **caractérisé en ce que** l'étape d'incorporation d'un polymère cationique dans ledit composé adhésif comprend la dotation dudit composé adhésif avec 0,2-4 % p/p de polymère cationique, de préférence 1-2 p/p de polymère cationique.

19. Procédé selon la revendication 18, **caractérisé en ce que** ledit composé adhésif comprend 2-12 % p/p d'alcool polyvinylique, de préférence 4-6 % p/p d'alcool polyvinylique.

20. Procédé selon l'une quelconque des revendications 13 à 19, **caractérisé en ce que** l'étape d'incorporation d'un polymère cationique dans ledit composé adhésif est exécutée avant l'interconnexion des plis de la bande multi-pli par le composé adhésif.

21. Procédé selon l'une quelconque des revendications 13 à 20, **caractérisé en ce que** ledit polymère cationique est sélectionné dans le groupe comprenant du polychlorure de diallyldiméthylammonium, des polyamines aliphatiques, des polyvinylamines cationiques, la polyvinyl-formamide, des dérivés de polyvinyl-formamide, des polyacrylamides cationiques et des polyéthylènes imines..

22. Procédé selon l'une quelconque des revendications 13 à 21, **caractérisé en ce que** la matière souple comporte de la matière souple recyclée.
